# EUROPEAN PATENT SPECIFICATION

(11) **EP 3 811 677 B1**
(45) Date of publication and mention of the grant of the patent: **19.04.2023**
(21) Application number: 18923753.0
(22) Date of filing: 23.06.2018
(51) Int. Cl.: H04W 12/03, H04W 36/00, H04W 40/24, H04W 12/04, H04W 12/106

(54) **ANCHOR NON-RELOCATION HANDLING IN 5G**
HANDHABUNG DER ANKERNICHTVERLAGERUNG IN 5G
MANIPULATION DE NON-RELOCALISATION D'ANCRAGE DANS LA 5G

(43) Date of publication of application: 28.04.2021
(73) Proprietor: QUALCOMM Incorporated, San Diego, CA 92121-1714 (US)
(72) Inventor: LIU, Huichun, San Diego, CA 92121-1714 (US); OZTURK, Ozcan, San Diego, CA 92121-1714 (US); LOPES, Luis Fernando Brisson, San Diego, CA 92121-1714 (US); HORN, Gavin, Bernard, San Diego, CA 92121-1714 (US); LEE, Soo Bum, San Diego, CA 92121-1714 (US)
(74) Representative: Bardehle Pagenberg Partnerschaft mbB Patentanwälte Rechtsanwälte
(86) International application number: PCT/CN2018/092527
(87) International publication number: WO 2019/242030

(56) References cited:
- US-A1- 2018 049 261
- HUAWEI ET AL: "Security of INACTIVE to CONNECTED state transition", 3GPP DRAFT; R2-1803263, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 15 February 2018 (2018-02-15), XP051399740, Retrieved from the Internet: URL:http://www.3gpp.org/ftp/tsg%5Fran/WG2% 5FRL2/TSGR2%5F101/Docs/ [retrieved on 2018-02-15]
- OPPO: "NR RRC Harmonization", 3GPP DRAFT; R2-1804552-NR RRC HARMONIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, P. R. China; 20180416 - 20180420 14 April 2018 (2018-04-14), XP051428278, Retrieved from the Internet: URL:http://www.3gpp.org/ftp/Meetings%5F3GP P%5FSYNC/RAN2/Docs/ [retrieved on 2018-04-14]
- INTEL CORPORATION: "Report of [101#58][NB-IoT/MTC R15] EDT security issues", 3GPP DRAFT; R2-1807523 101#58 EDT SECURITY ISSUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Republic of Korea; 20180521 - 20180525 20 May 2018 (2018-05-20), XP051443893, Retrieved from the Internet: URL:http://www.3gpp.org/ftp/Meetings%5F3GP P%5FSYNC/RAN2/Docs/ [retrieved on 2018-05-20]
- Qualcomm Incorporated: "Benefit of Periodic RNA Update Without Anchor Relocation", 3GPP TSG-RAN WG3 Meeting #99bis, R3-181940, 20 April 2018 (2018-04-20), XP051416939,
- Intel Corporation: "Consideration on periodic RNAU without anchor relocation", 3GPP TSG-RAN WG3 Meeting #99bis, R3-182053, 20 April 2018 (2018-04-20), XP051417075,

## Description

### INTRODUCTION

### Field of the Disclosure

Aspects of the present disclosure relate to wireless communications, and more particularly, to techniques and apparatus for refreshing (e.g., deriving new) security keys for enciphering and deciphering packets transmitted in a wireless communication system (e.g., in cases of anchor relocation, anchor non-relocation, etc.).

### Description of Related Art

Wireless communication systems are widely deployed to provide various telecommunication services such as telephony, video, data, messaging, broadcasts, etc. These wireless communication systems may employ multiple-access technologies capable of supporting communication with multiple users by sharing available system resources (e.g., bandwidth, transmit power, etc.). Examples of such multiple-access systems include 3rd Generation Partnership Project (3 GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

In some examples, a wireless multiple-access communication system may include a number of base stations (BSs), which are each capable of simultaneously supporting communication for multiple communication devices, otherwise known as user equipments (UEs). In an LTE or LTE-A network, a set of one or more base stations may define an eNodeB (eNB). In other examples (e.g., in a next generation, a new radio (NR), or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., which may be referred to as a base station, 5G NB, next generation NodeB (gNB or gNodeB), TRP, etc.). A base station or distributed unit may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. New Radio (NR) (e.g., 5G) is an example of an emerging telecommunication standard. NR is a set of enhancements to the LTE mobile standard promulgated by 3GPP. It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR technology. Preferably, these improvements should be applicable to other multi-access technologies and the telecommunication standards that employ these technologies.

3GPP Draft R2-1803263 "Security of INACTIVE to CONNECTED state transition" discloses that when RAN successfully retrieves and verifies UE context, an RRC Connection Resume kind of message is sent over SRB1 carried by RACH MSG4 with at least integrity protection to resume the RRC connection.

3GPP Draft R2-1804552 "NR RRC Harmonization" discloses resume NCC configuration for RRC Re-establishment during handover situations.

### BRIEF SUMMARY

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved communications in a wireless network.

The present disclosure provides a method for wireless communications according to claim 1, an apparatus for wireless communications at a user equipment according to claim 11, and an apparatus for wireless communications at an anchor base station according to claim 13. Preferred embodiments are subject of the dependent claims.

Numerous other aspects are provided including methods, apparatus, systems, computer program products, and processing systems.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain typical aspects of this disclosure and are therefore not to be considered limiting of its scope, for the description may admit to other equally effective aspects.
**FIG. 1** is a block diagram conceptually illustrating an example telecommunications system, in accordance with certain aspects of the present disclosure.
**FIG. 2** is a block diagram illustrating an example logical architecture of a distributed radio access network (RAN), in accordance with certain aspects of the present disclosure.
**FIG. 3** is a diagram illustrating an example physical architecture of a distributed RAN, in accordance with certain aspects of the present disclosure.
**FIG. 4** is a block diagram conceptually illustrating a design of an example base station (BS) and user equipment (UE), in accordance with certain aspects of the present disclosure.
**FIG. 5** is a diagram showing examples for implementing a communication protocol stack, in accordance with certain aspects of the present disclosure.
**FIG. 6** illustrates an example of a frame format for a new radio (NR) system, in accordance with certain aspects of the present disclosure.
**FIG. 7** is a flow diagram illustrating example operations for wireless communications by an anchor base station, in accordance with certain aspects of the present disclosure.
**FIG. 8** is a flow diagram illustrating example operations for wireless communications by a user equipment, in accordance with certain aspects of the present disclosure.
**FIG. 9** is a flow diagram illustrating example operations for wireless communications by a serving base station, in accordance with certain aspects of the present disclosure.
**FIG. 10** illustrates an example call flow for anchor non-relocation security handling, in accordance with certain aspects of the present disclosure.
**FIG. 11** illustrates an example call flow for anchor non-relocation security handling, in accordance with certain aspects of the present disclosure.
**FIG. 12** is a flow diagram illustrating example operations for wireless communications by an anchor base station.
**FIG. 13** illustrates an example call flow for anchor non-relocation security handling.
**FIG. 14** is a flow diagram illustrating example operations for wireless communications by an anchor base station.
**FIG. 15** illustrates an example call flow for anchor non-relocation security handling.
**FIG. 16** illustrates an example call flow for anchor relocation security handling.
**FIG. 17** illustrates an example call flow for anchor non-relocation security handling, in accordance with certain aspects of the present disclosure.
**FIG. 18** illustrates an example control message for aiding a UE in detecting a radio resource control (RRC) message, in accordance with certain aspects of the present disclosure.
**FIG. 19** illustrates an example call flow using the control message in **FIG. 18****,** in accordance with certain aspects of the present disclosure.
**FIG. 20** illustrates an example structure of a control message that may be used to aid Msg.4 detection by the UE, in accordance with certain aspects of the present disclosure.
**FIG. 21** illustrates an example of different combinations of techniques that can be used for anchor non-relocation security handling, in accordance with certain aspects of the present disclosure.
**FIG. 22** illustrates a communications device that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for security key handling for radio resource control (RRC) inactive state resume procedures without anchor node relocation, e.g., in 5G communication systems.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication technologies, such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS).

New Radio (NR) is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5Gand later, including NR technologies.

New radio (NR) access (e.g., 5G technology) may support various wireless communication services, such as enhanced mobile broadband (eMBB) targeting wide bandwidth (e.g., 80 MHz or beyond), millimeter wave (mmW) targeting high carrier frequency (e.g., 25 GHz or beyond), massive machine type communications MTC (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe.

NR introduces the concept of network slicing. For example, a network may have multiple slices, which may support different services, for example, internet of everything (IoE), URLLC, eMBB, vehicle-to-vehicle (V2V) communications, etc. A slice may be defined as a complete logical network that comprises of a set of network functions and corresponding resources necessary to provide certain network capabilities and network characteristics.

### EXAMPLE WIRELESS COMMUNICATIONS SYSTEM

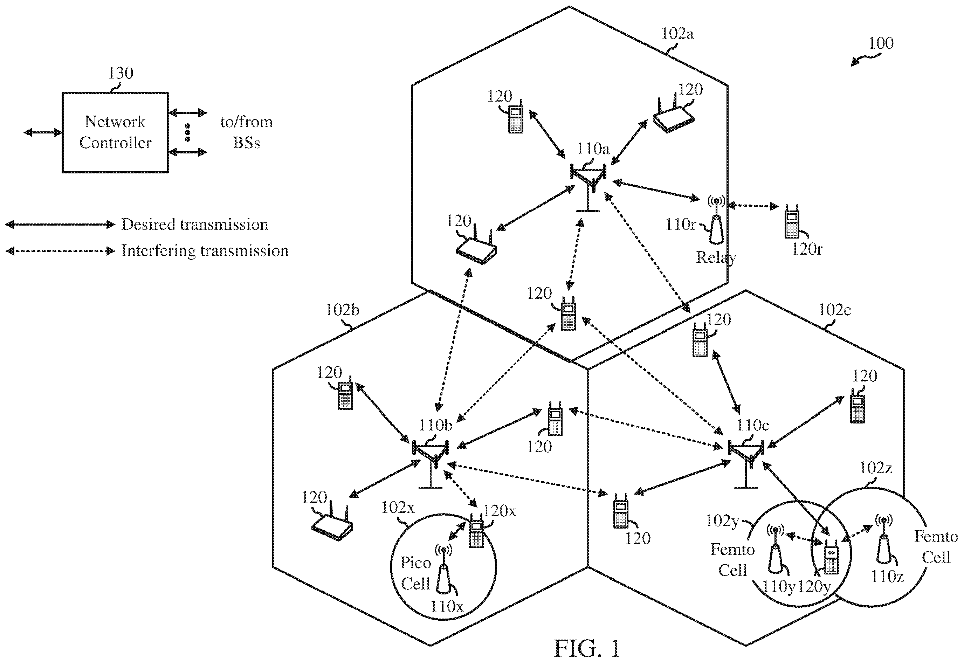

**FIG. 1** illustrates an example wireless communication network 100, such as a new radio (NR) or 5G network, in which aspects of the present disclosure may be performed, e.g., for security key handling during resume from radio resource control (RRC) inactive state without anchor node relocation, as described in greater detail below.

As illustrated in **FIG. 1****,** the wireless network 100 may include a number of base stations (BSs) 110 and other network entities. A BS may be a station that communicates with user equipments (UEs). Each BS 110 may provide communication coverage for a particular geographic area. In 3GPP, the term "cell" can refer to a coverage area of a Node B (NB) and/or a Node B subsystem serving this coverage area, depending on the context in which the term is used. In NR systems, the term "cell" and next generation NodeB (gNB), new radio base station (NR BS), 5G NB, access point (AP), or transmission reception point (TRP) may be interchangeable. In some examples, a cell may not necessarily be stationary, and the geographic area of the cell may move according to the location of a mobile BS. In some examples, the base stations may be interconnected to one another and/or to one or more other base stations or network nodes (not shown) in wireless communication network 100 through various types of backhaul interfaces, such as a direct physical connection, a wireless connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, NR or 5G RAT networks may be deployed.

A base station (BS) may provide communication coverage for a macro cell, a pico cell, a femto cell, and/or other types of cells. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in **FIG. 1****,** the BSs 1 10a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple (e.g., three) cells.

Wireless communication network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in **FIG. 1****,** a relay station 1 10r may communicate with the BS 110a and a UE 120r in order to facilitate communication between the BS 110a and the UE 120r. A relay station may also be referred to as a relay BS, a relay, etc.

Wireless network 100 may be a heterogeneous network that includes BSs of different types, e.g., macro BS, pico BS, femto BS, relays, etc. These different types of BSs may have different transmit power levels, different coverage areas, and different impact on interference in the wireless network 100. For example, macro BS may have a high transmit power level (e.g., 20 Watts) whereas pico BS, femto BS, and relays may have a lower transmit power level (e.g., 1 Watt).

Wireless communication network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may couple to a set of BSs and provide coordination and control for these BSs. The network controller 130 may communicate with the BSs 110 via a backhaul. The BSs 110 may also communicate with one another (e.g., directly or indirectly) via wireless or wireline backhaul.

The UEs 120 (e.g., 120x, 120y, etc.) may be dispersed throughout the wireless network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, which may be narrowband IoT (NB-IoT) devices.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10 or 20 MHz, respectively.

Aspects of the disclosure relate to apparatus, methods, processing systems, and computer readable mediums related to new radio (NR) (or 5G) systems as non-limiting examples. Other aspects may be applicable, for example, to LTE technologies, as a non-limiting example. NR may utilize OFDM with a CP on the uplink and downlink and include support for half-duplex operation using TDD. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

In some examples, access to the air interface may be scheduled. A scheduling entity (e.g., a base station) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (e.g., one or more other UEs), and the other UEs may utilize the resources scheduled by the UE for wireless communication. In some examples, a UE may function as a scheduling entity in a peer-to-peer (P2P) network, and/or in a mesh network. In a mesh network example, UEs may communicate directly with one another in addition to communicating with a scheduling entity.

In **FIG. 1****,** a solid line with double arrows indicates desired transmissions between a UE and a serving BS, which is a BS designated to serve the UE on the downlink and/or uplink. A finely dashed line with double arrows indicates interfering transmissions between a UE and a BS.

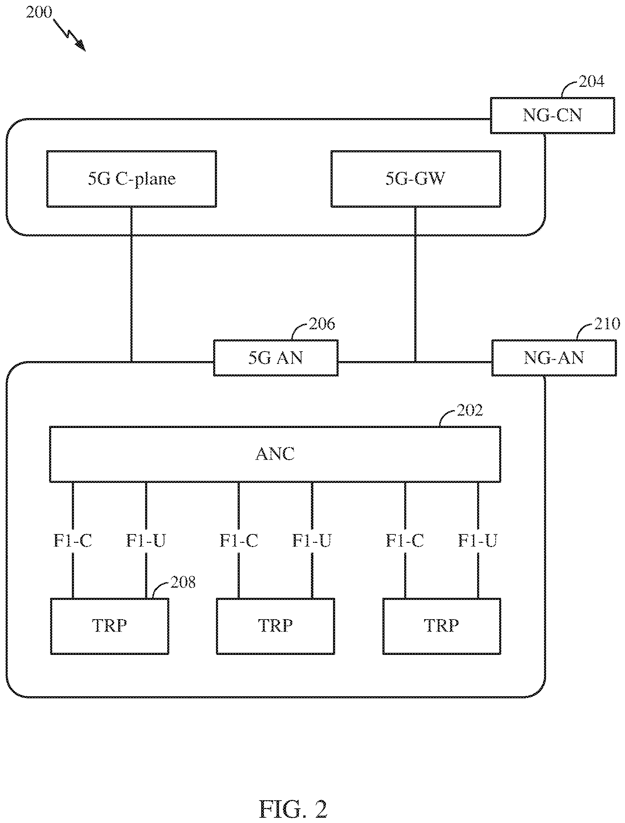

**FIG. 2** illustrates an example logical architecture of a distributed Radio Access Network (RAN) 200, which may be implemented in the wireless communication network 100 illustrated in **FIG. 1****.** A 5G access node 206 may include an access node controller (ANC) 202. ANC 202 may be a central unit (CU) of the distributed RAN 200. The backhaul interface to the Next Generation Core Network (NG-CN) 204 may terminate at ANC 202. The backhaul interface to neighboring next generation access Nodes (NG-ANs) 210 may terminate at ANC 202. ANC 202 may include one or more transmission reception points (TRPs) 208 (e.g., cells, BSs, gNBs, etc.).

The TRPs 208 may be a distributed unit (DU). TRPs 208 may be connected to a single ANC (e.g., ANC 202) or more than one ANC (not illustrated). For example, for RAN sharing, radio as a service (RaaS), and service specific AND deployments, TRPs 208 may be connected to more than one ANC. TRPs 208 may each include one or more antenna ports. TRPs 208 may be configured to individually (e.g., dynamic selection) or jointly (e.g., joint transmission) serve traffic to a UE.

The logical architecture of distributed RAN 200 may support fronthauling solutions across different deployment types. For example, the logical architecture may be based on transmit network capabilities (e.g., bandwidth, latency, and/or jitter).

The logical architecture of distributed RAN 200 may share features and/or components with LTE. For example, next generation access node (NG-AN) 210 may support dual connectivity with NR and may share a common fronthaul for LTE and NR.

The logical architecture of distributed RAN 200 may enable cooperation between and among TRPs 208, for example, within a TRP and/or across TRPs via ANC 202. An inter-TRP interface may not be used.

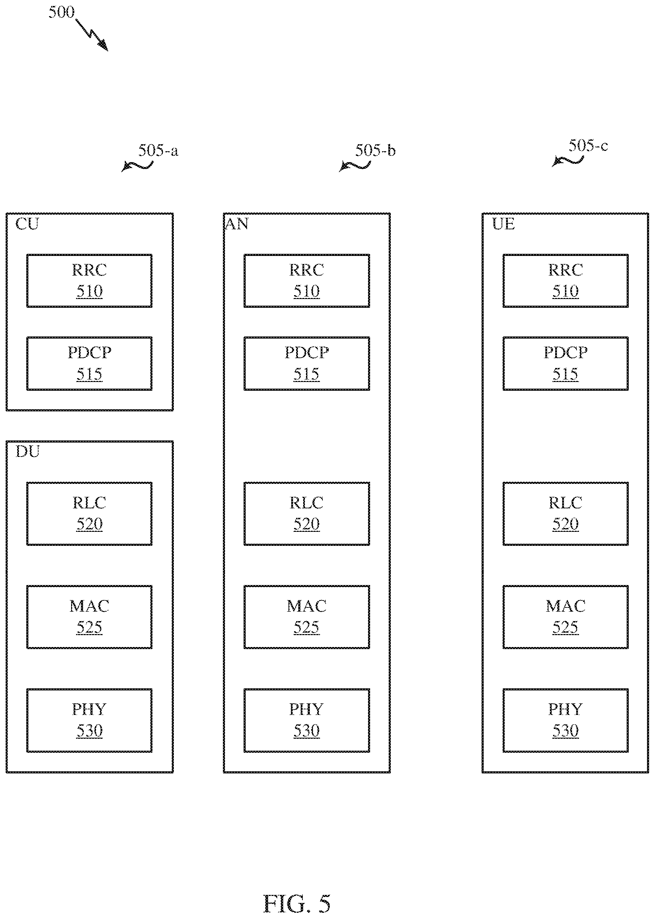

Logical functions may be dynamically distributed in the logical architecture of distributed RAN 200. As will be described in more detail with reference to **FIG. 5****,** the Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU (e.g., TRP 208) or CU (e.g., ANC 202).

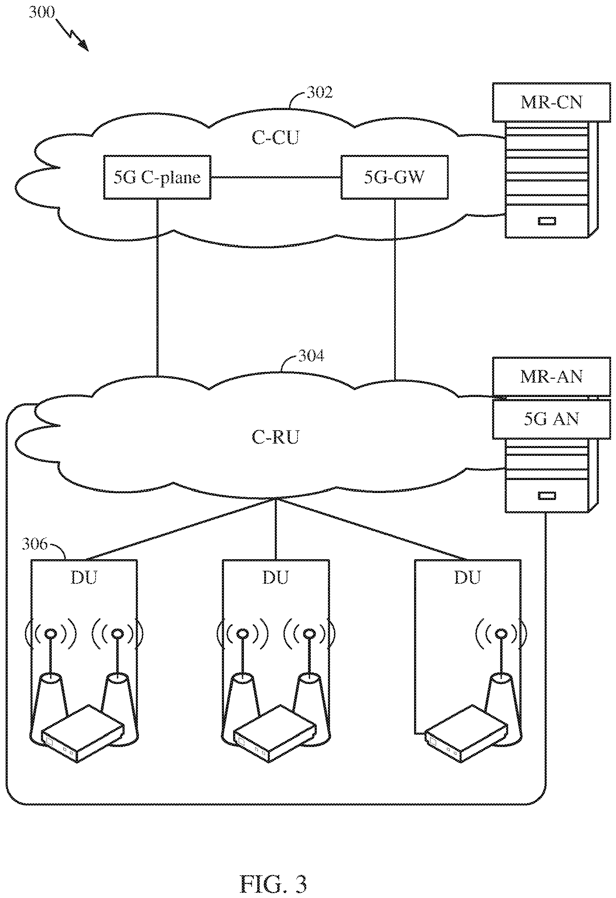

**FIG. 3** illustrates an example physical architecture of a distributed Radio Access Network (RAN) 300, according to aspects of the present disclosure. A centralized core network unit (C-CU) 302 may host core network functions. C-CU 302 may be centrally deployed. C-CU 302 functionality may be offloaded (e.g., to advanced wireless services (AWS)), in an effort to handle peak capacity.

A centralized RAN unit (C-RU) 304 may host one or more ANC functions. Optionally, the C-RU 304 may host core network functions locally. The C-RU 304 may have distributed deployment. The C-RU 304 may be close to the network edge.

A DU 306 may host one or more TRPs (Edge Node (EN), an Edge Unit (EU), a Radio Head (RH), a Smart Radio Head (SRH), or the like). The DU may be located at edges of the network with radio frequency (RF) functionality.

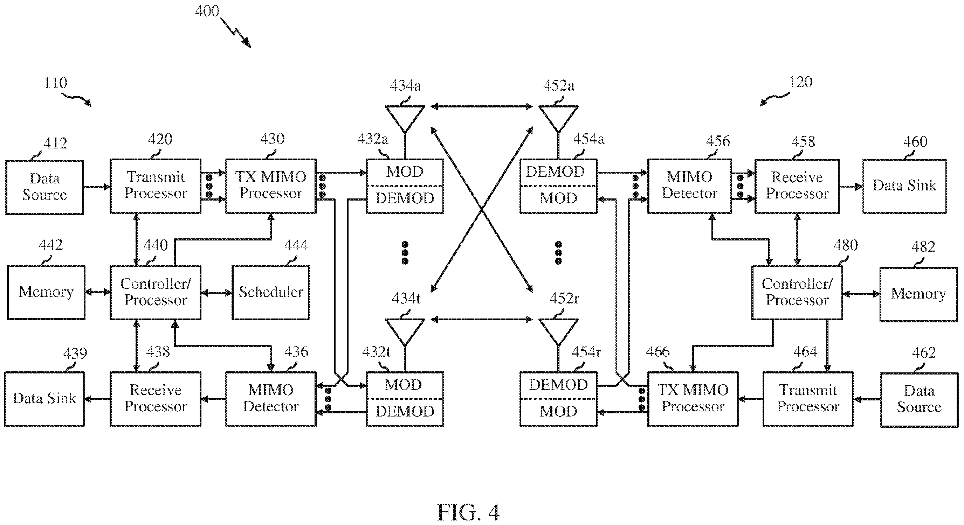

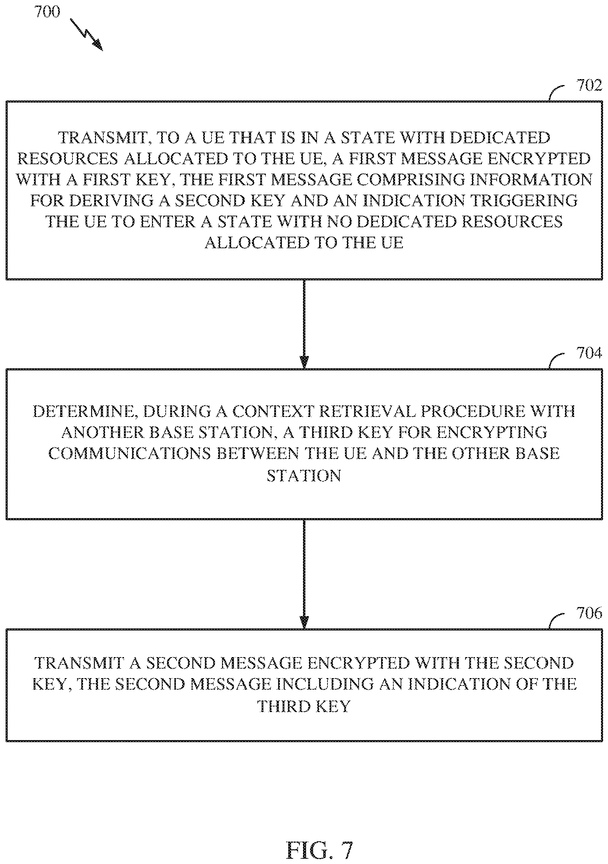

**FIG. 4** illustrates example components of BS 110 and UE 120 (as depicted in **FIG. 1****),** which may be used to implement aspects of the present disclosure. As noted above, the BS may include a TRP. For example, antennas 452, processors 466, 458, 464, and/or controller/processor 480 of the UE 120 and/or antennas 434, processors 420, 460, 438, and/or controller/processor 440 of the BS 110 may be used to perform the operations described herein and illustrated with reference **FIGs. 7-19****,** and/or other various techniques and methods described herein.

At the BS 110, a transmit processor 420 may receive data from a data source 412 and control information from a controller/processor 440. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 420 may process (e.g., encode and symbol map) the data and control information to obtain data symbols and control symbols, respectively. The processor 420 may also generate reference symbols, e.g., for the primary synchronization signal (PSS), secondary synchronization signal (SSS), and cell-specific reference signal (CRS). A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the base station 110 and may provide received signals to the demodulators (DEMODs) in transceivers 454a through 454r, respectively. Each demodulator 454 may condition (e.g., filter, amplify, downconvert, and digitize) a respective received signal to obtain input samples. Each demodulator may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at UE 120, a transmit processor 464 may receive and process data (e.g., for the physical uplink shared channel (PUSCH)) from a data source 462 and control information (e.g., for the physical uplink control channel (PUCCH) from the controller/processor 480. The transmit processor 464 may also generate reference symbols for a reference signal (e.g., for the sounding reference signal (SRS)). The symbols from the transmit processor 464 may be precoded by a TX MIMO processor 466 if applicable, further processed by the demodulators in transceivers 454a through 454r (e.g., for SC-FDM, etc.), and transmitted to the base station 110. At the BS 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct the operation at the base station 110 and the UE 120, respectively. The processor 440 and/or other processors and modules at the BS 110 may perform or direct, e.g., the execution of the functional blocks illustrated in **FIGs. 7-19****,** and/or other processes for the techniques described herein. the execution of processes for the techniques described herein. The processor 480 and/or other processors and modules at the UE 120 may perform or direct, e.g., the execution of the functional blocks illustrated in **FIGs. 7-19****,** and/or other processes for the techniques described herein. The memories 442 and 482 may store data and program codes for BS 110 and UE 120, respectively. A scheduler 444 may schedule UEs for data transmission on the downlink and/or uplink.

**FIG. 5** illustrates a diagram 500 showing examples for implementing a communications protocol stack, according to aspects of the present disclosure. The illustrated communications protocol stacks may be implemented by devices operating in a wireless communication system, such as a 5G system (e.g., a system that supports uplink-based mobility). Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples, the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in **FIG. 2****)** and distributed network access device (e.g., DU 208 in **FIG. 2****).** In the first option 505-a, an RRC layer 510 and a PDCP layer 515 may be implemented by the central unit, and an RLC layer 520, a MAC layer 525, and a PHY layer 530 may be implemented by the DU. In various examples the CU and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device. In the second option, RRC layer 510, PDCP layer 515, RLC layer 520, MAC layer 525, and PHY layer 530 may each be implemented by the AN. The second option 505-b may be useful in, for example, a femto cell deployment.

Regardless of whether a network access device implements part or all of a protocol stack, a UE may implement an entire protocol stack as shown in 505-c (e.g., the RRC layer 510, the PDCP layer 515, the RLC layer 520, the MAC layer 525, and the PHY layer 530).

In LTE, the basic transmission time interval (TTI) or packet duration is the 1 ms subframe. In NR, a subframe is still 1 ms, but the basic TTI is referred to as a slot. A subframe contains a variable number of slots (e.g., 1, 2, 4, 8, 16, ... slots) depending on the subcarrier spacing. The NRRB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing.

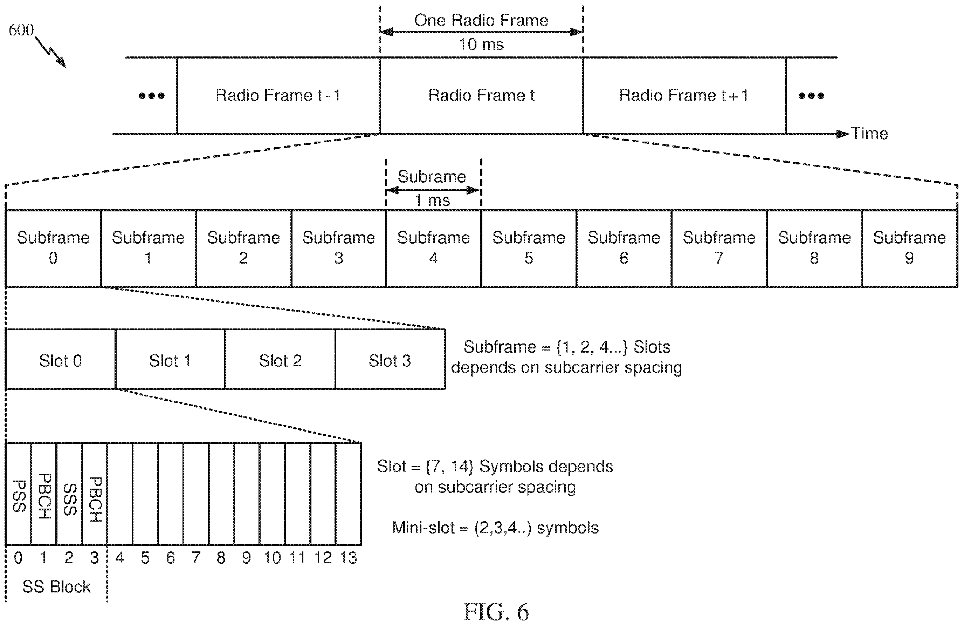

**FIG. 6** is a diagram showing an example of a frame format 600 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot is a subslot structure (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in **FIG. 6****.** The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a physical downlink shared channel (PDSCH) in certain subframes.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an AN, or a DU, or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a CU to which receiving network access device(s) transmit the measurements of the pilot signals, may use the measurements to identify serving cells for the UEs, or to initiate a change of serving cell for one or more of the UEs.

A UE may be in one of a plurality of operating states. One of the states may be referred to as an RRC_IDLE state. In the RRC_IDLE state, the UE may not have an active connection to an AN, and the AN does not have a context for the UE.

Another of the operating states may be an inactive state that represents a middle ground between a connected state and an idle state. In the inactive state, there is a UE context in the AN, but no active connection between the UE and the AN. The inactive state may be referred to as "RRC_COMMON," "RRC INACTIVE," "RRC DORMANT," or as an "inactive state in RRC_CONNECTED mode" and such terms are used interchangeably herein. In the inactive state, the UE does not have any dedicated resources (e.g., time and frequency resources for the UE to transmit on that other UEs are not also transmitting on, time and frequency resources for signals that only the UE is intended to receive). The UE may monitor a paging channel with a long discontinuous reception (DRX) cycle (e.g., around 320 ms to 2560 ms). The UE can receive multimedia broadcast multicast service (MBMS) data while in this state.

If the UE obtains data to transmit (e.g., a user activates the UE to start a voice call) to the network (e.g., to a BS or via a BS to another entity), then the UE can perform either a state transition procedure from RRC_INACTIVE into RRC_CONNECTED mode (e.g., by sending an RRC connection resume message to an AN) or a data transmission procedure that may include contention based access (e.g., performing a contention procedure to access a BS). Additional characteristics of the inactive state may include, e.g., cell reselection mobility, CN to NR RAN connection (both C/U-planes) established for the UE, the UE AS context is stored in at least one gNB and the UE, paging is initiated by NR RAN, RAN-based notification area (RNA) is managed by NR RAN, NR RAN knows the RAN-based notification area which the UE belongs to, and the UE may have no dedicated resources.

In some cases, allowing data transmission to or from a UE (or other type of mobile device) that is in RRC_INACTIVE state makes sense if the UE has a small amount of data to transmit and RAN has no data or only a small amount of data to transmit while the UE is in the inactive state. If either the UE or RAN has subsequent data to transmit, the overhead to move to an active connected state (e.g., RRC_CONNECTED mode) may be justified, so that the data can be sent with dedicated resources.

Another of the operating states may be an active state. In the active state, there is a UE context in the AN and an active connection between the UE and the AN. In the active state, the UE may have dedicated resources for transmissions to or from the AN and other devices. The active state may be referred to as "RRC_CONNECTED mode," "RRC CONNECTED active state," "RRC DEDICATED," "RRC_ACTIVE," or "active state in RRC CONNECTED mode" and such terms are used interchangeably herein. When the AN obtains information that the AN should set up an RRC connection with dedicated resources for the UE (e.g., the AN receives an RRC connection resume request message from the UE, the AN obtains data to be transmitted to the UE), then the AN may send a transmission (e.g., a page) to the UE to cause the UE to transition to the active state. When the AN acknowledges the RRC connection resume request message, then the UE may enter the active state.

A UE may exchange (e.g., transmit and/or receive) packets with a base station (e.g., a TRP). According to previously known techniques, a UE and a BS, which establish a connection, may refresh an encryption and decryption key set after exchanging a fourth message (MSG.4) in a connection establishment procedure, where a first and third message of the connection establishment procedure are sent from the UE to the BS and a second and fourth message are received by the UE from the BS. Some networks, e.g., NR, may support RRC connection resume procedures that involve a relocation of the PDCP function on the network side (e.g., anchor relocation scenario) and/or RRC connection resume procedures that do not involve a relocation of the PDCP function on the network side (e.g., anchor non-relocation scenario).

### EXAMPLE ANCHOR NON-RELOCATION HANDLING IN 5G

Some networks (e.g., NR) may support key refreshing during a state transition when a UE establishes a connection (e.g., connected state) with a new gNB and/or when a connection is suspended (e.g., inactive state). For example, in such networks, the UE may be provided with a next hop chaining counter (NCC) to use for deriving a security key (K2) when the connection is suspended, e.g., via a RRC connection suspend message. Additionally, certain standards may support separation between keys, and suggest that devices use new keys as soon as possible.

Currently, networks may provide security handling for connection resume procedures that involve a relocation of the PDCP anchor (e.g., anchor relocation). For example, in context transfers that involve a relocation of the PDCP anchor, the Msg.4 may be security protected (e.g., encrypted and optionally integrity protected) with a new key derived based on the NCC received in the suspend message (e.g., RRC release message). However, while current techniques may provide security handling for resume procedures in anchor relocation cases, these techniques may not be applicable for resume procedures in anchor non-relocation cases. Accordingly, it may be desirable to provide techniques for security handling in resume procedures for anchor non-relocation situations.

Aspects presented herein provide techniques for handling (e.g., refreshing or deriving new) security keys for RRC inactive state resume procedures (e.g., when transitioning from RRC_Inactive to RRC_Connected) that do not involve a relocation of the anchor node (e.g., the PDCP anchor location does not change). Anchor non-relocation may be used for one or more different scenarios. For example, in one case, anchor non-relocation may be used for one-shot uplink small data/signaling transmission in Msg.3 and/or one-shot downlink data/signaling transmission in Msg.4. In some cases, anchor non-relocation may be used for a periodic RNA update without follow-on uplink transmission. In some cases, anchor non-relocation may be used for a location report triggered RAN paging (e.g., with a one-shot downlink data/signaling transmission).

**FIGs. 7-9** are flow diagrams of operations that may be performed by an anchor base station, UE, and serving base station, respectively, for security key handling during resume procedures that do not involve an anchor relocation. As used herein, the term anchor generally refers to a base station (e.g., an eNB/gNB) that an inactive UE has previously connected with that has the UE context for subsequent communication. On the other hand, the term serving generally refers to a base station that is currently in direct communication with a UE (and which may or may not be an anchor). Further, as used herein, security protecting a message generally refers to performing encryption and integrity protection of the message based on a security key. For example, the encryption may be performed based on an encryption key derived from the security key, and integrity protection may be performed based on a integrity protection key derived from the security key.

**FIG. 7** illustrates example operations 700 that may be performed by an anchor base station to enable security key handling during anchor non-relocation, in accordance with certain aspects of the present disclosure.

Operations 700 begin, at 702, where the anchor base station transmits, to a user equipment (UE) that is in a state with dedicated resources allocated to the UE (e.g., a RRC connected state), a first message encrypted with a first key (e.g., K1). For example, the first message may be security protected based on a first encryption key and a first integrity protection key derived from the first key. The first message may be encrypted based on the first encryption key. The first message includes information (e.g., NCC) for deriving a second key (e.g., K2). The first message triggers the UE to enter a state with no dedicated resources allocated to the UE (e.g., a RRC inactive state).

At 704, the anchor base station determines, during a context retrieval procedure with another base station (e.g., serving base station), a third key (e.g., K3) for encrypting communications between the UE and the other base station. At 706, the anchor base station sends a second message encrypted with the second key (e.g., encrypted based on an encryption key derived from the second key). The second message includes an indication of the third key.

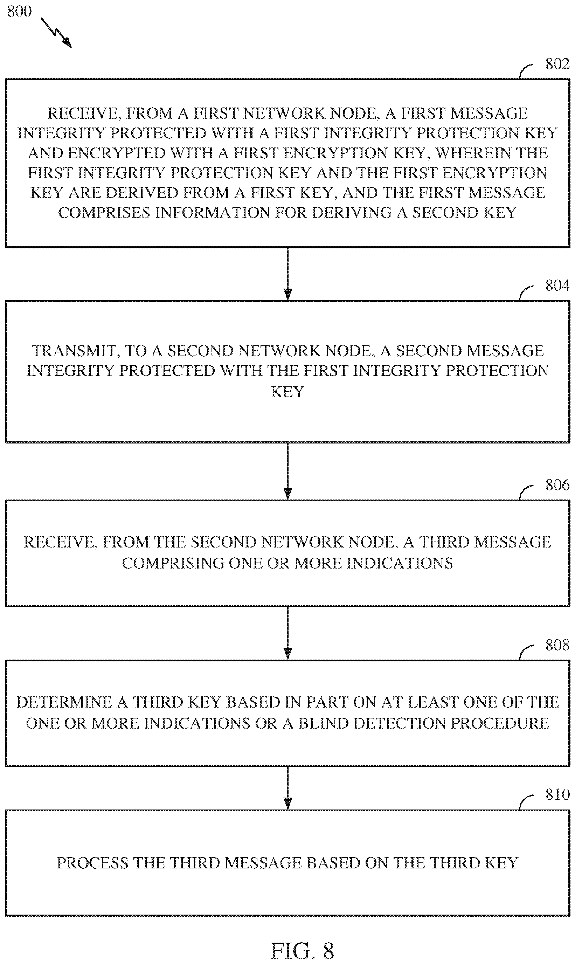

**FIG. 8** illustrates example operations 800 that may be performed by a user equipment (UE) to enable security key handling during anchor non-relocation, in accordance with certain aspects of the present disclosure.

Operations 800 begin, at 802, wherein the UE receives, from a first network node (e.g., an anchor base station), a first message integrity protected with a first integrity protection key and encrypted with a first encryption key. The first integrity protection key and the first encryption key are derived from a first key (e.g., K1). The first message includes information for deriving a second key (e.g., K2). In some aspects, the first message may be received while the UE is in a state with dedicated resources allocated to the UE (e.g., RRC connected state). The first message may further include an indication triggering the UE to enter a state with no dedicated resources allocated to the UE.

At 804, the UE transmits, to a second network node (e.g., serving base station), a second message integrity protected with the first protection key. The second message is transmitted while the UE is in a state with no dedicated resources allocated to the UE (e.g., RRC inactive state), and requests to resume a RRC connection. The UE requests to resume an RRC connection for at least one of a periodic RNA update (e.g., without follow-on uplink transmission), a location report triggered RAN paging procedure (e.g., with at most one-shot DL data/signaling transmission), a small uplink data/signaling transmission (e.g., in Msg.3) with a small downlink data/signaling transmission (e.g., in Msg.4), etc.

At 806, the UE receives, from the second network node, a third message including one or more indications. At 808, the UE determines a third key based in part on at least one of the one or more indications in the third message or a blind detection procedure. At 810, the UE processes the third message based on the third key. In some aspects, determining the third key may include determining whether the third key is the first key or the second key. The third message may include information for deriving a fourth key (e.g., K3) for security protecting communications between the UE and the second network node. In some aspects, the first network node and the second network node may be the same.

In some aspects, operations 800 may include deriving a second integrity protection key and a second encryption key from the third key. In some aspects, the processing of the third message (e.g., at operation 810) may include decrypting the third message using the second encryption key, and verifying the third message using the second integrity protection key.

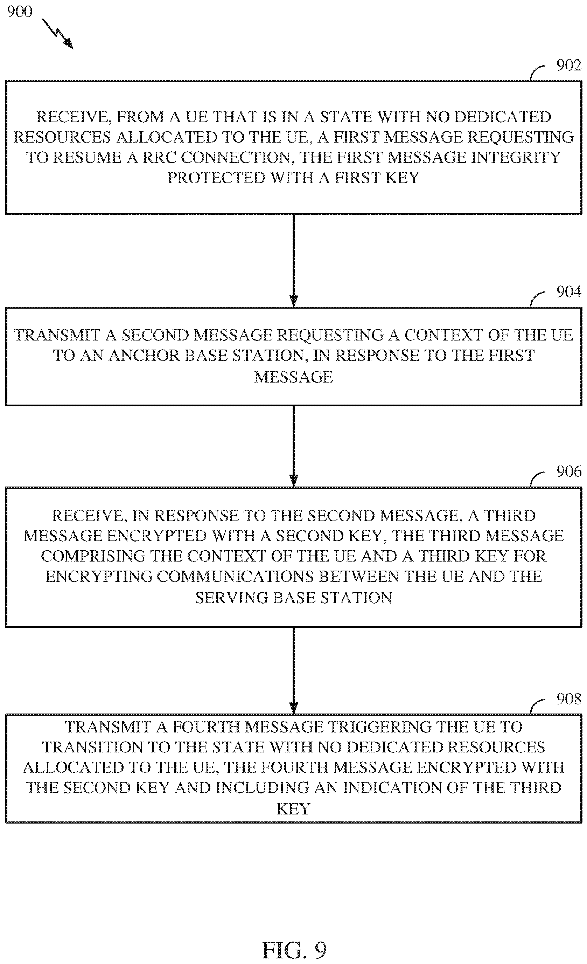

**FIG. 9** illustrates example operations 900 that may be performed by a serving base station to enable security key handling during anchor non-relocation, in accordance with certain aspects of the present disclosure.

Operations 900 begin, at 902, where the serving base station receives, from a user equipment that is in a state with no dedicated resources allocated to the UE (e.g., RRC inactive state), a first message requesting to resume a RRC connection. The first message is integrity protected with a first key (e.g., K1) (based on an integrity protection key derived from the first key). At 904, the serving base station transmits a second message requesting a context of the UE to an anchor base station. At 906, the serving base station receives, in response to the second message, a third message encrypted with a second key (e.g., K2). The third message includes the UE context and a third key (e.g., K3) for encrypting communications between the UE and the serving base station. At 908, the serving base station transmits a fourth message triggering the UE to transition to the state with no dedicated resources allocated to the UE. The fourth message is encrypted with the second key and includes an indication of the third key.

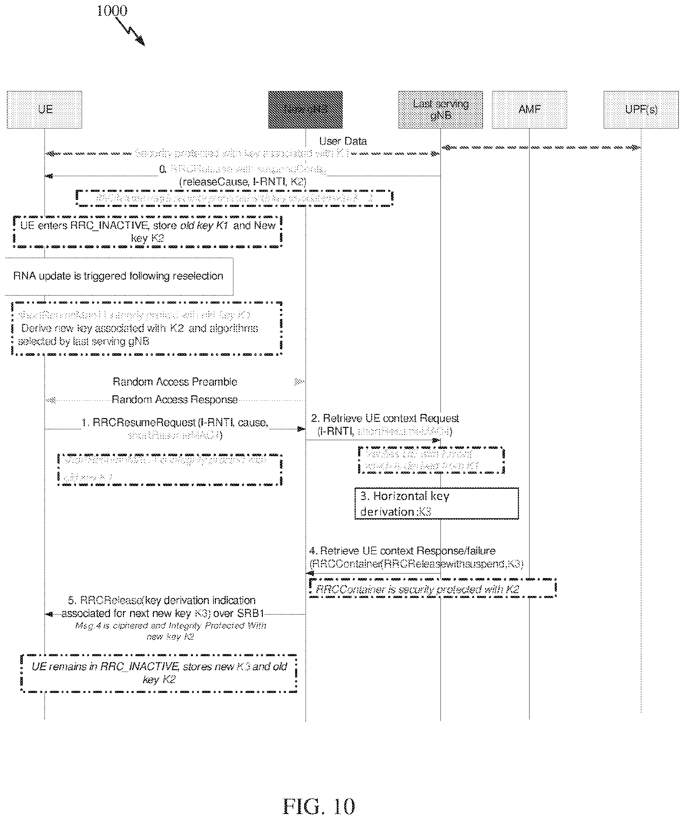

**FIG. 10** illustrates an example call flow 1000 for anchor non-relocation security handling, in accordance with certain aspects of the present disclosure. In particular, **FIG. 10** illustrates a reference example where the anchor node derives a horizontal key during a context retrieval procedure that does not involve a relocation of the PDCP anchor. As illustrated, communications between the UE and the anchor gNB (e.g., last serving gNB) may be initially security protected with a key associated with (e.g., derived from) a first security key (K1). At step 0, the anchor gNB sends a RRC release message (with suspend configuration) to trigger the UE to transition from a connected state to an inactive state. The RRC release message includes a next hop chaining counter (NCC) for the UE to use for deriving a security key (K2). The RRC release message may be security protected (e.g., encrypted and optionally integrity protected) with NCC.

After the UE enters the inactive state, an RNA update (e.g., if the UE moves off the configured RNA) triggers the UE to perform a RRC connection establishment procedure. As shown, the UE sends a random access preamble (e.g., a RACH Msg.1 message) to the serving gNB (e.g., new gNB). The serving gNB responds to the UE with a random access response message (e.g., a RACH Msg.2 message). At step 1, the UE sends a RRCConnectionResumeRequest message (e.g., a RACH Msg.3 message) to the serving gNB. The UE integrity protects the RRCConnectionResumeRequest message using an encryption key that the UE has determined previously, based on a previous NCC received from the anchor gNB. The old key (K1) is input in the calculation of shortResumeMAC-I in the Msg.3 message.

At step 2, the serving gNB requests the anchor gNB to provide the UE Context. After verifying the UE with a key (e.g., K_{RRCint}) derived from K1, the anchor gNB, at step 3, derives (e.g., via horizontal key derivation) a horizontal key (K3). At step 4, the anchor gNB provides to the serving gNB a UE context response that includes a RRC Release message. For example, the anchor gNB generates a RRC Release with suspendConfig Msg to trigger the UE to enter a state with no dedicated resources allocated to the UE (e.g., RRC Inactive state). The RRC Release message is security protected (e.g., encrypted and integrity protected) with the new key (K2), and includes key derivation information associated with the next new key (K3).

At step 5, the serving gNB sends a RRCRelease message (e.g., Msg.4) over SRB1. Msg.4 is security protected with the new key (K2) and includes the key derivation indication associated with the next new key (K3). Once received, the UE remains in RRC_Inactive state, and stores the new key (K3) and the old key (K2). In some aspects, from the UE perspective, Msg.4 may always be security protected with the new key (K2) (e.g., as opposed to the old key (K1)), which can simplify the UE behavior.

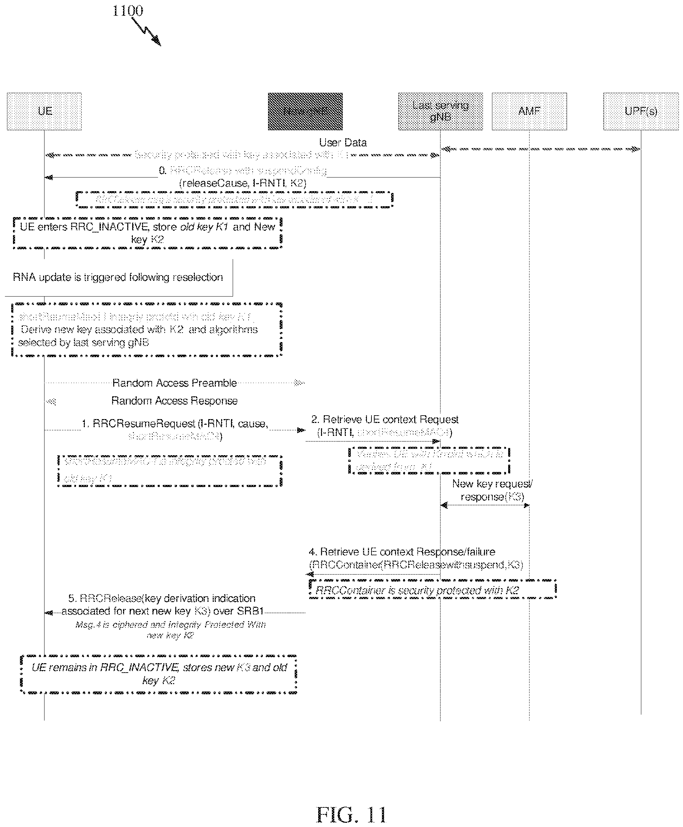

**FIG. 11** illustrates an example call flow 1100 for anchor non-relocation security handling, in accordance with certain aspects of the present disclosure. **FIG. 11** is similar to **FIG. 10****,** except that in **FIG. 11** the anchor node derives a vertical key (e.g., with the AMF) during a context retrieval procedure that does not involve a relocation of the PDCP anchor, as opposed to deriving a horizontal key as illustrated in **FIG. 10****.** In particular, as shown, after the anchor node verifies the UE with K_{RRCint}, the anchor node may retrieve the next {NH, NCC} pair to use for deriving the vertical key.

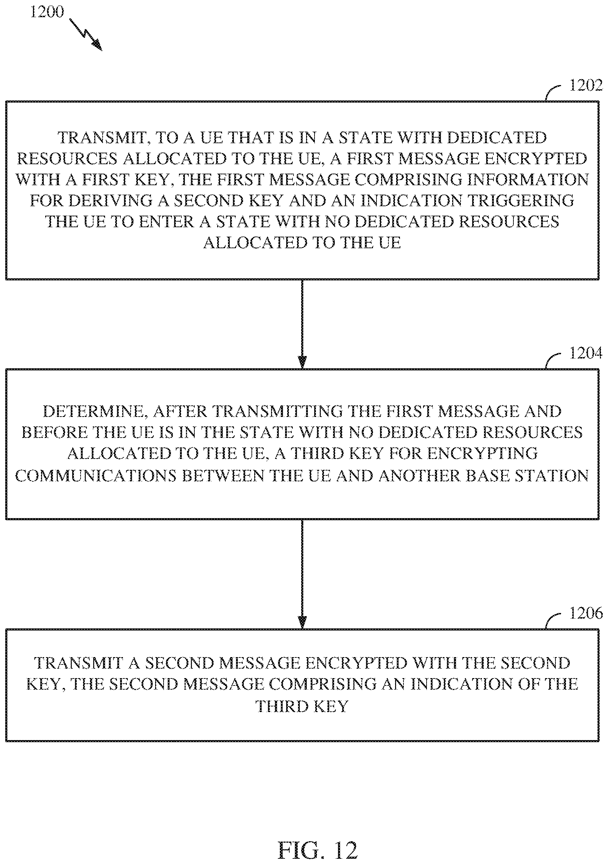

Illustrative techniques presented herein may enable the anchor node to derive the vertical key with the AMF in advance (e.g., before the context retrieval procedure). **FIG. 12** illustrates example operations 1200 that may be performed by an anchor base station to enable security key handling during anchor non-relocation.

Operations 1200 begin, at 1202, where the anchor base station transmits to a UE that is in a state with dedicated resources allocated to the UE (e.g., RRC connected state), a first message encrypted with a first key (e.g., K1). The first message includes information (e.g., NCC) for deriving a second key (e.g., K2) and an indication triggering the UE to enter a state with no dedicated resources allocated to the UE (e.g., RRC inactive state).

At 1204, the anchor base station, after transmitting the first message and before the UE is in the state with no dedicated resources allocated to the UE, determines a third key (e.g., K3) for encrypting communications between the UE and another base station (e.g., serving base station). At 1206, the anchor base station sends a second message encrypted with the second key. The second message includes an indication of the third key.

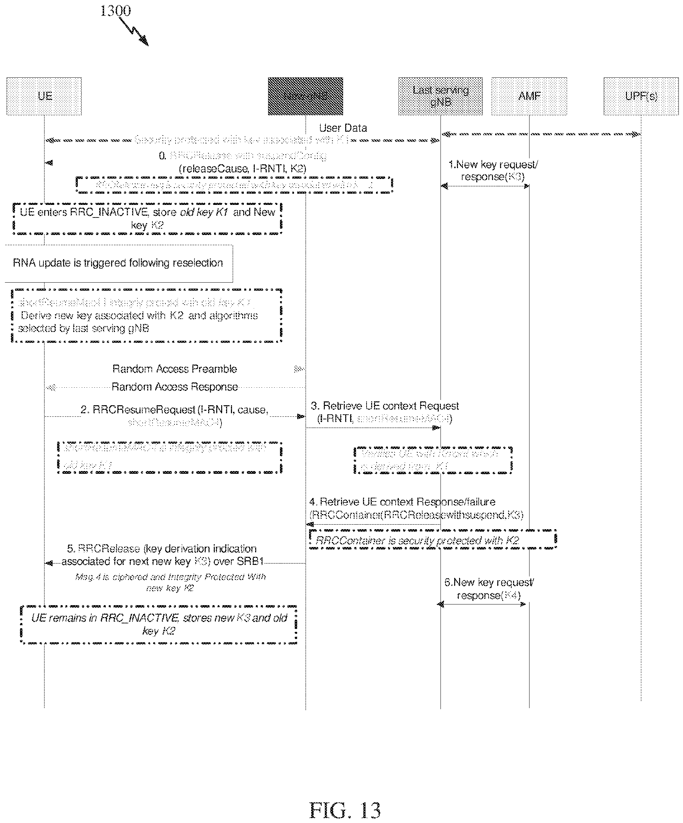

**FIG. 13** illustrates an example call flow 1300 for anchor non-relocation security handling. **FIG. 13** is similar to **FIG. 12****,** except that in **FIG. 13** the anchor gNB derives the next new vertical keys (K3, K4) (e.g., with the AMF) after sending the UE to the RRC Inactive state prior to the context retrieval procedure and after the context retrieval procedure, respectively. In particular, at step 1, the anchor gNB determines the next new vertical key (K3) after sending the RRC release message (at step 0) and prior to the UE entering the RRC inactive state. At step 6, the anchor gNB determines the next new vertical key (K4) after sending the RRC release message (at step 5) and before the UE enters the RRC inactive state. In some aspects, the new key request/response (e.g., at steps 1 and 6) may be via an existing N2 signaling procedure (e.g., a state change report and acknowledgement exchange), or via a new signaling procedure.

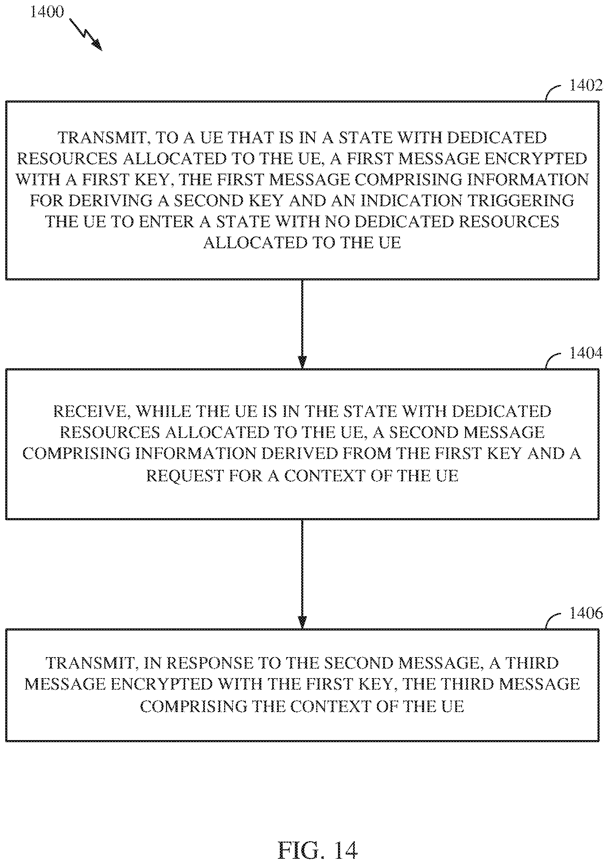

Illustrative techniques presented herein may provide security handling during anchor non-relocation without a new key derivation in the anchor node. **FIG. 14** illustrates example operations 1400 that may be performed by an anchor base station to enable security key handling during anchor non-relocation.

Operations 1400 begin, at 1402, where the anchor base station transmits, to a user equipment (UE) that is in a state with dedicated resources allocated to the UE (e.g., RRC connected state), a first message encrypted with a first key (e.g., K1). The first message includes information (e.g., NCC) for deriving a second key (e.g., K2) and an indication triggering the UE to enter a state with no dedicated resources allocated to the UE (e.g., RRC Inactive state).

At 1404, the anchor base station receives, while the UE is in the state with dedicated resources allocated to the UE, a second message comprising information (e.g., a resume ID) derived from the first key and a request for a context of the UE. At 1406, the anchor base station sends, in response to the second message, a third message encrypted with the first key. The third message includes the context of the UE.

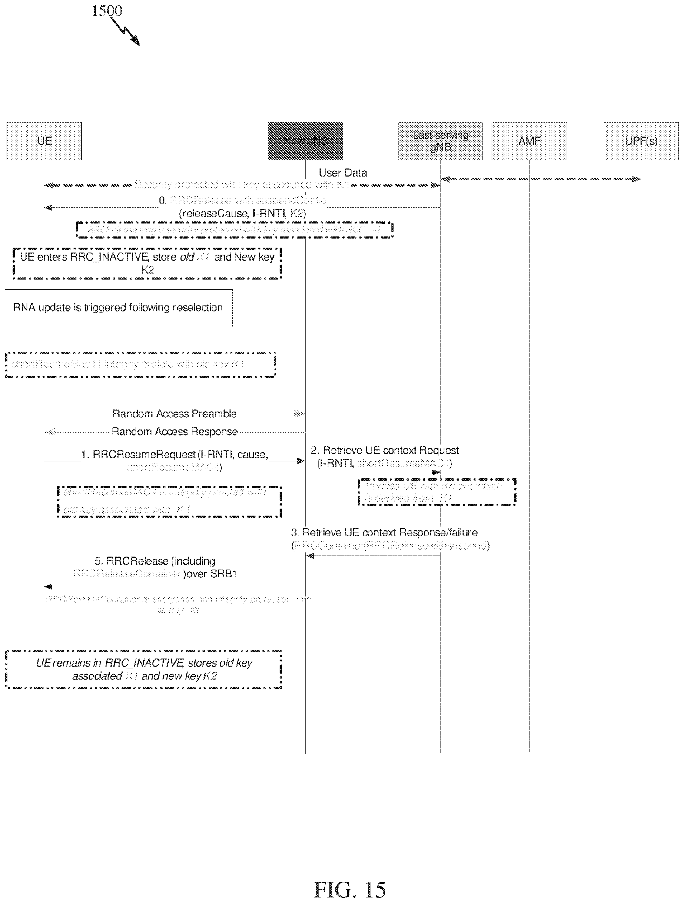

**FIG. 15** illustrates an example call flow 1500 for anchor non-relocation security handling. **FIG. 15** is similar to **FIG. 11****,** except that in **FIG. 15****,** the anchor gNB does not perform a new key derivation. Rather, as shown, the anchor gNB generates a RRC release message with a suspend Config message, and security protects this message with the old key (K1). At step 5, the serving gNB transmits the RRC release message (e.g., Msg.4) to the UE over SRB1. From the UE point of view, the UE may receive Msg.4 that is security protected with the old key (e.g., anchor non-relocation) or security protected with the new key (e.g., anchor relocation).

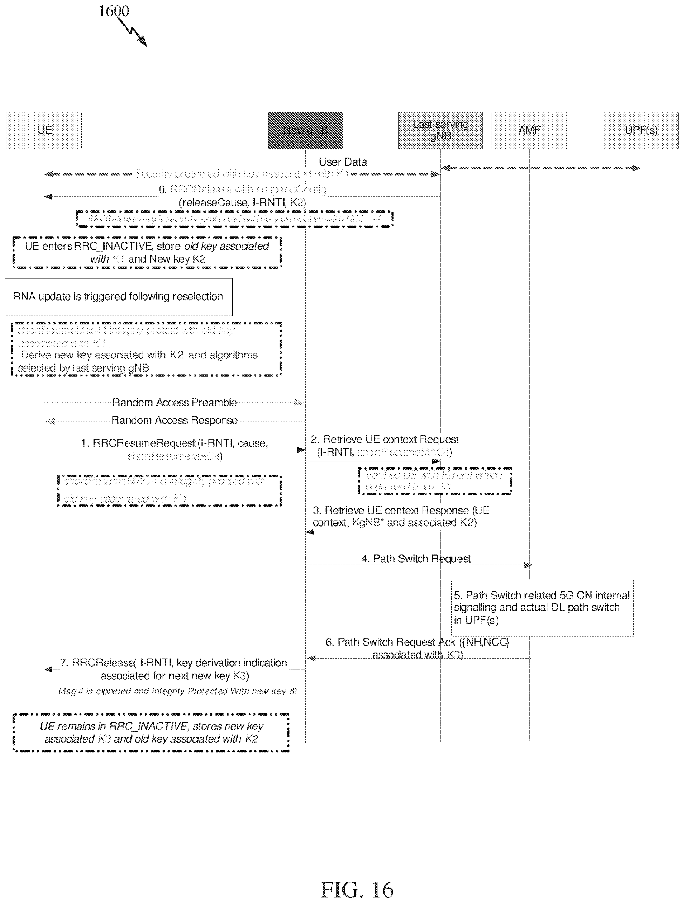

**FIG. 16** illustrates an example call flow 1600 for anchor relocation security handling. In particular, **FIG. 16** illustrates a reference example in which the serving node (e.g., serving gNB) derives the new key.

As shown, at step 0, the anchor gNB sends a RRC release message (with suspend configuration) to trigger the UE to transition from a connected state to an inactive state. The RRC release message includes a next hop chaining counter (NCC) for the UE to use for deriving a security key (K2). The RRC release message may be security protected (e.g., encrypted and optionally integrity protected) with NCC. After the UE enters the inactive state, at step 1, the UE sends a RRCConnectionResumeRequest message (e.g., a RACH Msg.3 message) to the serving gNB. The UE may integrity protect the RRCConnectionResumeRequest message using an encryption key that the UE has determined previously, based on a previous NCC received from the anchor gNB. The old key (K1) is input in the calculation of shortMAC-I in the RRCConnectionResumeRequest. At step 2, the serving gNB requests the anchor gNB to provide the UE Context. After verifying the UE with a key (e.g., K_{RRCint}) derived from K1, the anchor gNB provides the UE context including the new key (K2). In steps 4-6, a path switch is performed (involving a relocation of the PDCP anchor). After the path switch, the next hop new key {NH, NCC} pair associated with K3 is acquired from AMF by the serving gNB. At step 7, the UE is sent back to the inactive state with a RRC release message (e.g., RACH Msg.4 message) that is security protected (e.g., encrypted and integrity protected) with the new key K2, and that includes the next new key indication associated with K3.

In certain aspects, from the perspective of the UE, there may be situations in which Msg.4 is security protected by the old key (K1) and situations in which Msg.4 is security protected by the new key (K2). Accordingly, it may be desirable to provide techniques that enable the UE to determine how to detect and process Msg.4.

In some aspects, the Msg.4 detection may include checking whether the Msg.4 is security protected by the new key or old key, as well as checking security key derivation parameters, such as an absolute radio frequency channel number (ARFCN) and physical cell identity (PCI) of both the serving and anchor nodes. For example, in LTE, ARFCN and PCI are input parameters of the Msg.4 security key derivation. In LTE, these two parameters are generally associated with the cell that generates the RRC message. However, in NR systems, the RRC message in some cases can be generated by the anchor gNB and forwarded by the serving gNB. Thus, assuming the ARFCN and PCI are not always associated with the serving cell, Msg.4 detection may involve the following scenarios: (A) security protected by new key; ARFCN/PCI of serving cell; (B) security protected by old key; ARFCN/PCI of anchor cell; (C) security protected by old key; ARFCN/PCI of serving cell; and (D) security protected by new key; ARFCN/PCI of anchor cell. Scenario A may occur when Msg.4 is from the anchor node during anchor non-relocation or from the serving node during anchor relocation. Scenarios B, C and D may occur when Msg.4 is from the anchor node during anchor non-relocation.

In some aspects, the UE may perform a blind detection of Msg.4, which may involve detecting each the above scenarios. Alternatively, according to certain aspects, techniques presented here may always associate the security key derivation parameters ARFCN and PCI (e.g., for the Msg.4 security key derivation) with those of the serving cell's. For example, in NR, the input parameters ARFCN and PCI in the Msg.4 security key derivation can always be those of the serving cell's, regardless of whether Msg.4 is using the old key or the new key generated by the anchor node or serving node. In certain aspects, the cell ID of the serving cell may be provided to the anchor node in the Retrieve context request. The anchor node can derive the serving cell's ARFCN/PCI from its received neighbor configuration. This neighbor configuration may be correlated with the cell ID, and may have to be provided to the anchor node in the Xn setup.

Thus, in certain aspects, the anchor node (e.g., anchor base station) may derive the new key (K2) based on security key derivation parameters associated with the anchor base station or security key derivation parameters associated with the serving base station. In cases where the anchor node derives the new key based on security key derivation parameters associated with the anchor base station, the anchor base station may include an indication (e.g., in the RRC Release suspend message to the serving base station) that the security key derivation parameters are associated with the anchor base station. In cases where the anchor node derives the new key based on security key derivation parameters associated with the serving node, the anchor base station may not have to provide an indication in the RRC Release suspend message.

By associating security key derivation parameters ARFCN and PCI with the serving cell, techniques presented herein can significantly simplify the UE behavior and reduce network signaling cost. For example, in other cases, the UE may have to resort to blind detection or exchange additional signaling to determine whether the parameters are associated with the serving cell or the anchor cell.

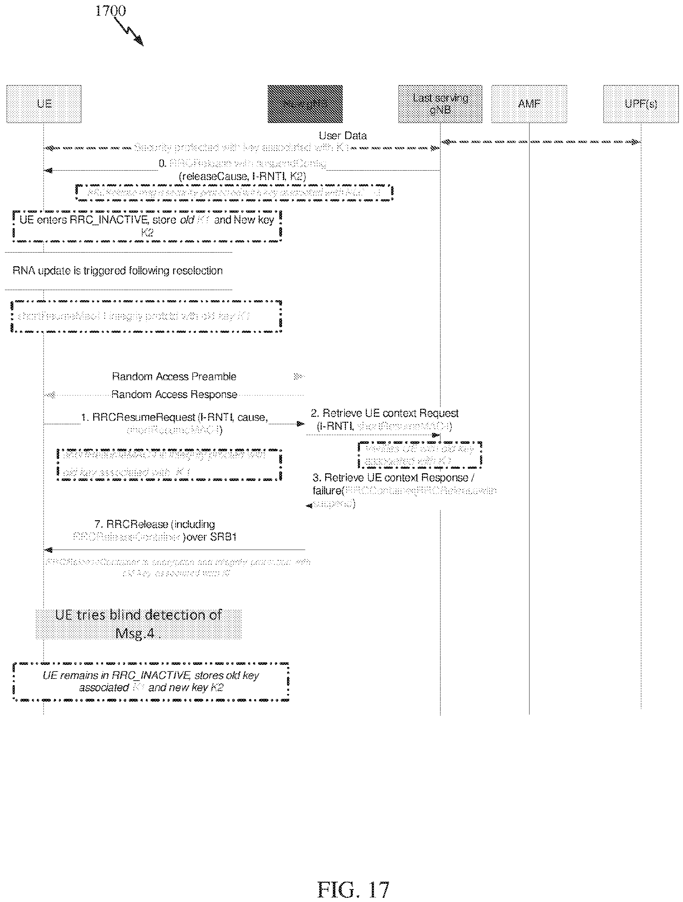

**FIG. 17** illustrates an example call flow 1700 for anchor non-relocation security handling, in accordance with certain aspects of the present disclosure. In particular, **FIG. 17** illustrates a reference example in which the UE performs a blind Msg.4 detection. As shown, after receiving the RRC release message (including the RRCReleaseContainer) over SRB1 in step 7, the UE attempts a blind detection of Msg.4. As noted, this blind detection may include checking whether Msg.4 is security protected by the new key (K2) or old key (K1). The blind detection may also include checking ARFCN/PCI of both the serving cell and the anchor cell. Thus, the Msg.4 blind detection may involve detecting each of the scenarios A-D described above. In some aspects, after performing the blind detection procedure, the UE may determine that Msg.4 is security protected with the new key and that ARFCN/PCI are associated with the anchor cell. In some aspects, after performing the blind detection procedure, the UE may determine that Msg.4 is security protected with the old key and that ARFCN/PCI are associated with the anchor cell.

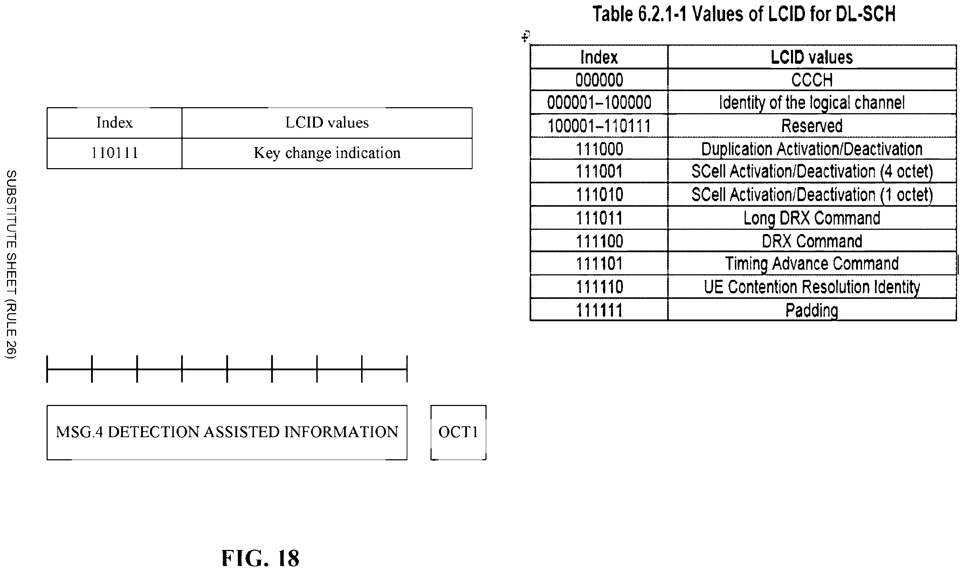

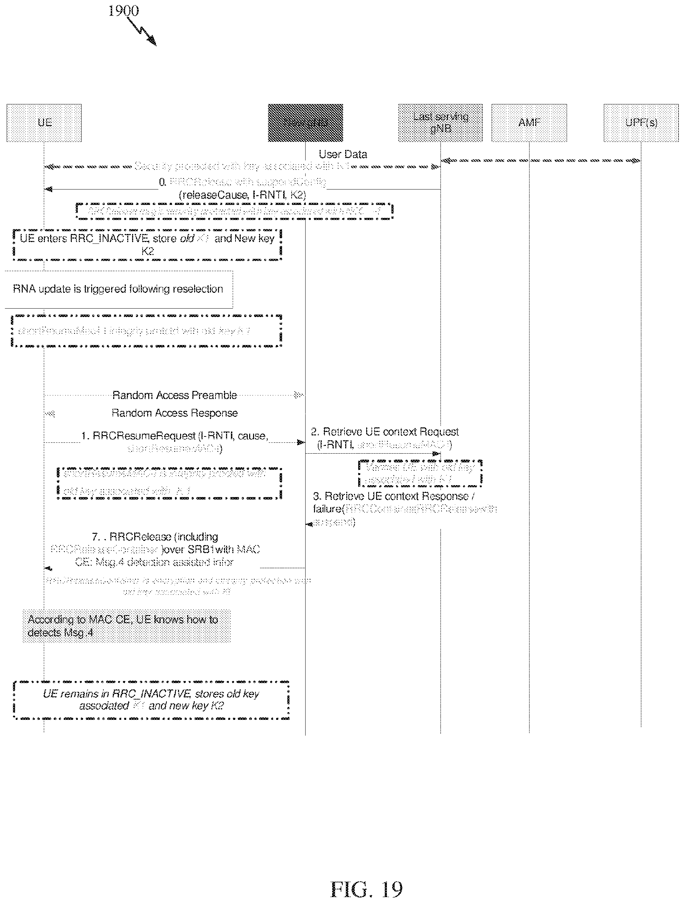

According to certain aspects, a new medium access control (MAC) control element (CE) may be defined to tell the UE whether to decode Msg.4 with the new key or the old key, whether the security key derivation input parameters are of the anchor node or the serving node, etc. **FIG. 18** illustrates an example of a new MAC CE that may be used to inform the UE how to decode Msg.4, in accordance with certain aspects of the present disclosure. As shown, the MAC CE may include Msg.4 detection assisted information, and may be identified by a MAC PDU sub-header with LCID. In the depicted example, one of (or more than one of) the reserved indexes (e.g., 110111) of the values of LCID for the DL-SCH may be reused for the Msg.4 detection assisted information. The Msg.4 detection assisted information may have a fixed size and consist of a single field (having a size of a single octet, for example) as shown. As shown in **FIG. 19****,** the UE (at step 7) may receive a RRC Release message over SRB1 (from the serving gNB) with the MAC CE: Msg.4 detection assisted information, and determine, based on the information, how to detect Msg.4. In some aspects, the serving gNB may determine how to set MAC CE based on whether the RRC Container is generated by the anchor node in Xn message, or by the serving gNB itself.

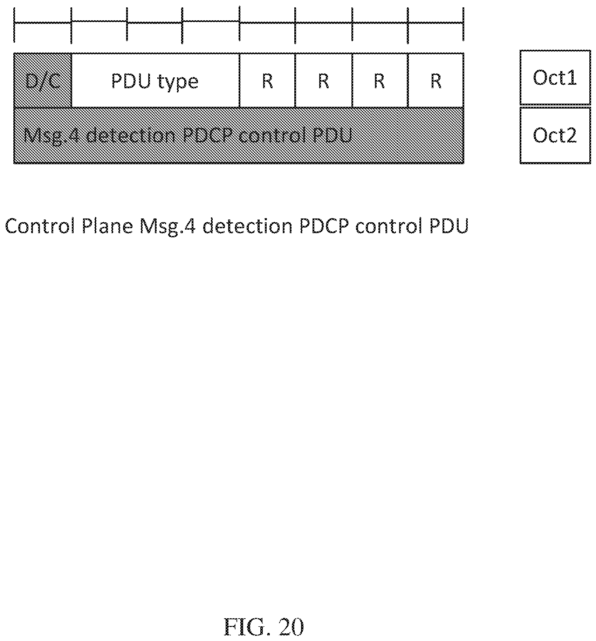

According to certain aspects, a new PDCP control PDU message may be defined to tell the UE how to decode/detect Msg.4. **FIG. 20** illustrates an example structure of a PDCP control PDU that may be used to aid Msg.4 detection by the UE. As shown, an additional octet may be used to provide the UE with Msg.4 detection assisted information. Similar to the above, this information may indicate whether the UE should decode Msg.4 with the new key or old key, indicate whether the security key derivation parameters are associated with the anchor node or serving node, etc. The PDCP control PDU may be included within Msg.4. Since the PDCP control PDU may not be encrypted (e.g., the PDCP control PDU may be integrity protected), the UE may be able to use the information within to detect Msg.4.

Thus, the information (or indications) included within at least one of the PDCP control PDU message or the MAC CE (within Msg.4) may indicate one of: (1) Msg.4 is security protected with the old key and the security key derivation parameter(s) are associated with the anchor node; (2) Msg.4 is security protected with the old key and the security key derivation parameter(s) are associated with the serving node; (3) Msg.4 is security protected with the new key and the security key derivation parameter(s) are associated with the anchor node; or (4) Msg.4 is security protected with the new key and the security key derivation parameter(s) are associated with the serving node.

According to certain aspects, techniques may aid Msg.4 detection by the UE by indicating to the UE whether a PDCP count value has reset (e.g., the count is at an initial value) or not-reset (e.g., the count is at a non-initial value). Consider the following example scenario (1) where, in anchor non-relocation, Msg.4 comes from the anchor node and is security protected with the old key, and the example scenario (2) where, in anchor relocation, Msg.4 comes from the serving node and is security protected with the new key. In the case of anchor non-relocation (e.g., scenario 1), Msg.4 that is security protected with the old key (K1) may come from the anchor gNB without resetting the COUNT (i.e., continue transmission on SRB). In the case of anchor relocation, Msg.4 that is security protected with the new key may come from the serving node with COUNT resetting from 0.

In these aspects, the UE may determine that Msg.4 is security protected with the old key if the count value is a non-initial value, where the non-initial value indicates anchor non-relocation, and determine that Msg. 4 is security protected with the new key if the count value is an initial value (e.g., zero, or reset, or fixed value), where the initial value indicates anchor relocation. In some aspects, the PDCP count value may be set to a fixed value when the anchor node chances (e.g., the fixed value may be all 1's, or some other fixed value).

In some aspects, when the anchor node changes the key (e.g., refreshes the key) but the anchor node doesn't change (e.g., context transfer does not occur), there may be some cases in which the PDCP count may not indicate whether the anchor node has changed or not, because the new key derivation typically resets the PDCP count. Thus, in these cases, another indicator (e.g., MAC CE, PDCP CE, or other field in the PDCP header) may be used to indicate whether the anchor node has changed, and other information associated with Msg.4 detection.

Aspects described herein may provide techniques that enable the anchor node (e.g., anchor gNB) to determine to whether to perform anchor relocation. For example, in some aspects, the serving node may provide a follow-on flag in Xn Msg. The flag can be set to true by the serving node according to the UE assisted information in Msg.3. For example, a buffer status report (BSR) in Msg.3 may indicate that the UE has subsequent UL packet(s) to transmit. Aspects may enable the anchor node to make an anchor relocation decision based on the follow-on flag in Xn and/or other information. For example, the anchor node may determine whether the resume procedure is due to a periodic RNA or mobility triggered RNA by checking the serving node's RANAC/cell ID/TAI, UE configured RNA list, RAU timer, etc.

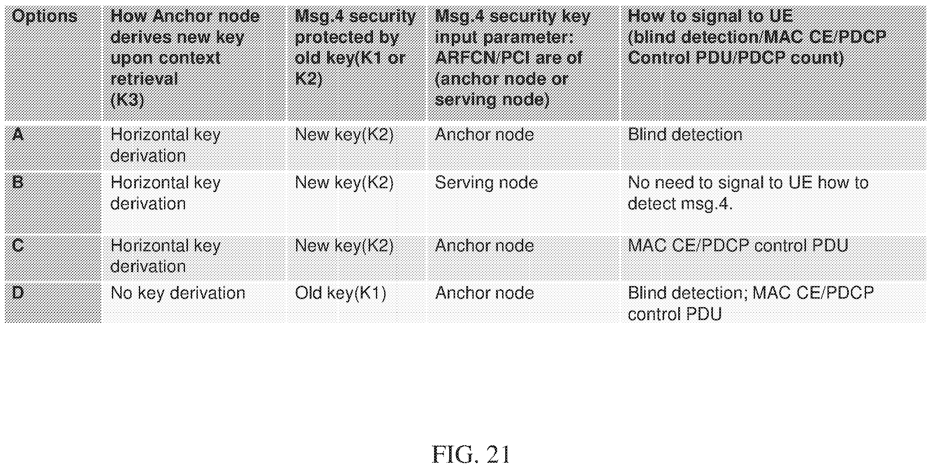

Note that the one or more of the techniques, or any combination of the techniques described herein may be used to provide security handling for resume procedures in anchor non-relocation. **FIG. 21****,** for example, illustrates different combinations of techniques that can be used for anchor non-relocation security handling, in accordance with certain aspects of the present disclosure. In option A, the UE may perform a blind detection between ARFCN/PCI of the serving node and ARFCN/PCI of the anchor node. In option B, since from the UE point of view, Msg.4 may be security protected by the new key, ARFCN/PCI may always be associated with the serving node. In option C, new signaling may be defined to aid Msg.4 detection by the UE. In option D, the UE may perform blind detection between two options: (1) Msg.4 is old key; ARFCN/PCI are of anchor node; and (2) Msg.4 is new key; ARFCN/PCI are of serving node.

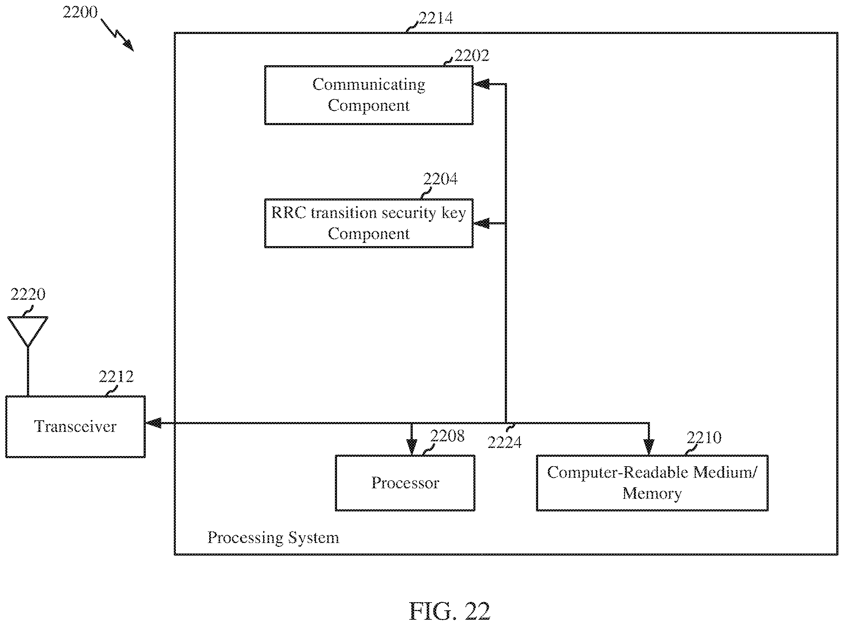

**FIG. 22** illustrates a communications device 2200 that may include various components (e.g., corresponding to means-plus-function components) configured to perform operations for the techniques disclosed herein, such as the operations illustrated in **FIGs. 7-****17** and **19.** The communications device 2200 includes a processing system 2214 coupled to a transceiver 2212. The transceiver 2212 is configured to transmit and receive signals for the communications device 2200 via an antenna 2220, such as the various signals described herein. The processing system 2214 may be configured to perform processing functions for the communications device 2200, including processing signals received and/or to be transmitted by the communications device 2200.

The processing system 2214 includes a processor 2208 coupled to a computer-readable medium/memory 2210 via a bus 2224. In certain aspects, the computer-readable medium/memory 2210 is configured to store instructions that when executed by processor 1108, cause the processor 2208 to perform the operations illustrated in **FIGs. 7-17** and **19,** and/or other operations for performing the various techniques discussed herein.

In certain aspects, the processing system 2214 further includes a communicating component 2202 for performing the operations illustrated at 702 and 706 in **FIG. 7****,** operations illustrated at 802-806 in **FIG. 8****,** operations illustrated at 902-908 in **FIG. 9****,** operations in **FIGs. 10-11****,** operations illustrated at 1202 and 1206 in **FIG. 12****,** operations in **FIG. 13****,** operations illustrated at 1402-1406 in **FIG. 14****,** operations illustrated in FIGs. **15-****17** and **19.** Additionally, the processing system 2214 includes a RRC transition security key component 2204 for performing the operations illustrated at 704 in **FIG. 7****,** operations illustrated at 808-810 in **FIG. 8****,** operations illustrated at 902-908 in **FIG. 9****,** operations in **FIGs. 10-11****,** operations illustrated at 1204 in **FIG. 12****,** operations in **FIG. 13****,** operations illustrated at 1402-1406 in **FIG. 14****,** and operations illustrated in **FIGs. 15-17** and **19..** The communicating component 2202 and RRC transition security key component 2204 may be coupled to the processor 2208 via bus 2224. In certain aspects, the communicating component 2202 and resource component 2204 may be hardware circuits. In certain aspects, the communicating component 2202 and resource component 2204 may be software components that are executed and run on processor 2208.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

In some cases, rather than actually communicating a frame, a device may have an interface to communicate a frame for transmission or reception. For example, a processor may output a frame, via a bus interface, to an RF front end for transmission. Similarly, rather than actually receiving a frame, a device may have an interface to obtain a frame received from another device. For example, a processor may obtain (or receive) a frame, via a bus interface, from an RF front end for transmission.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for."

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

For example, means for transmitting, means for sending, means for signaling, means for indicating, means for assigning, means for providing, means for retrieving, means for detecting, means for interacting, means for requesting, means for negotiating, means for exchanging, means for communicating, and/or means for receiving may comprise one or more of a transmit processor 420, a TX MIMO processor 430, a receive processor 438, or antenna(s) 434 of the base station 110 and/or the transmit processor 464, a TX MIMO processor 466, a receive processor 458, or antenna(s) 452 of the user equipment 120. Additionally, means for identifying, means for determining, means for requesting, means for negotiating, means for agreeing, means for signaling, means for storing, means for interacting, means for deriving, means for encrypting, means for decrypting, means for integrity protecting, means for integrity checking, means for security protecting, means for verifying, means for (re)entering, means for exiting, means for checking, means for transitioning, means for configuring, means for generating, means for assigning, means for providing, means for updating, means for modifying, means for changing, means for selecting, means for detecting, means for assuming, means for processing, means for decoding, means for encapsulating, means for triggering, means for performing, means for using, and/or means for applying may comprise one or more processors, such as the controller/processor 440 of the base station 110 and/or the controller/processor 480 of the user equipment 120.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see **FIG. 1****),** a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For example, instructions for performing the operations described herein and illustrated in **FIGs. 7-17** and **19.**

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

## Claims

1. A method for wireless communications by a user equipment, UE (120), comprising:
receiving (802), from an anchor base station (110), a first message integrity protected with a first integrity protection key and encrypted with a first encryption key, wherein the first integrity protection key and the first encryption key are derived from a first key, and the first message comprises information for deriving a second key;
entering, based on an indication in the first message, a first state with no dedicated resources allocated to the UE;
transmitting (804), to a serving base station (110), a second message integrity protected with the first integrity protection key, wherein the second message comprises a request to transition from the first state to a second state with dedicated resources allocated to the UE;
receiving (806), from the serving base station, a third message comprising one or more indications;
determining (808) a third key based in part on at least one of the one or more indications in the third message or a blind detection procedure;
processing (810) the third message based on the third key; and
remaining in the first state in response to receiving the third message;
wherein the second message is sent for a radio access network, RAN, notification area, RNA, update.

2. The method of claim 1, wherein determining (808) the third key comprises determining whether the third key is the first key or the second key based in part on the one or more indications.

3. The method of claim 2, wherein:
the third message comprises a packet data convergence protocol, PDCP, header; and
the one or more indications comprise a count value in the PDCP header.

4. The method of claim 3, wherein the determination is that the third key is the first key if the count value is a non-initial value, wherein the non-initial count value in particular indicates anchor non-relocation.

5. The method of claim 2, wherein the one or more indications comprise at least one of an indication of whether the third key is the first key or the second key, or an indication of whether one or more parameters for deriving the third key are associated with the anchor base station or the serving base station.

6. The method of claim 5, wherein the one or more indications indicate:
that the third key is the first key and that the one or more parameters are associated with the anchor base station; or
that the third key is the first key and that the one or more parameters are associated with the serving base station; or
that the third key is the second key and that the one or more parameters are associated with the anchor base station; or
that the third key is the second key and that the one or more parameters are associated with the serving base station.

7. The method of claim 5, wherein the one or more indications are provided in a medium access control, MAC, control element, CE, or a packet data convergence protocol, PDCP, control protocol data unit, PDU; or
wherein the one or more parameters comprise at least one of an absolute radio frequency channel number, ARFCN, or a physical cell identifier, PCI.

8. The method of claim 1, wherein determining (808) the third key comprises at least one of:
assuming that the third key is always the second key; or
assuming that one or more parameters for deriving the third key are always associated with the serving base station.

9. The method of claim 1, further comprising:
deriving a second integrity protection key and a second encryption key from the third key;
wherein processing (810) the third message in particular comprises:
decrypting the third message using the second encryption key; and
verifying the third message using the second integrity protection key; or
wherein the third message in particular further comprises information for deriving a fourth key.

10. The method of claim 1, wherein the blind detection procedure comprises at least one of:
detecting whether the third key is the first key;
detecting whether the third key is the second key;
detecting whether one or more parameters for deriving the third key are associated with the anchor base station; or
detecting whether the one or more parameters are associated with the serving base station; or
further comprising determining after the blind detection procedure that:
the third key is the second key and the one or more parameters are associated with the anchor base station; or
the third key is the first key and the one or more parameters are associated with the anchor base station.

11. An apparatus for wireless communications at a user equipment, UE (120; 2200), comprising:
a receiver (2212) configured to receive (802), from an anchor base station (110), a first message integrity protected with a first integrity protection key and encrypted with a first encryption key, wherein the first integrity protection key and the first encryption key are derived from a first key, and the first message comprises information for deriving a second key;
a transmitter (2212) configured to transmit (804), to a serving base station (110), a second message integrity protected with the first integrity protection key,
wherein the receiver is further configured to receive (806), from the serving base station, a third message comprising one or more indications,
wherein the apparatus further comprises:
at least one processor (2208) configured to:
enter, based on an indication in the first message, a first state with no dedicated resources allocated to the UE;
determine (808) a third key based in part on at least one of the one or more indications in the third message or a blind detection procedure;
process (810) the third message based on the third key; and
remain in the first state in response to receiving the third message; and
a memory coupled to the at least one processor,
wherein the second message comprises a request to transition from the first state to a second state with dedicated resources allocated to the UE, and
wherein the second message is sent for a radio access network, RAN, notification area, RNA, update.

12. The apparatus of claim 11, wherein the at least one processor (2208) is further configured to perform the method of any one of claims 2 to 10.

13. An apparatus (110) for wireless communication at an anchor base station, comprising:
a transmitter (2212) configured to transmit (702), to a user equipment, UE (120), a first message encrypted with a first key, the first message comprising information for deriving a second key and an indication triggering the UE to enter a state with no dedicated resources allocated to the UE;
at least one processor (2208) configured to:
determine (704), during a context retrieval procedure with a serving base station, a third key for encrypting communications between the UE and the serving base station; and
determine whether to perform anchor relocation based on a type of radio access network, RAN, notification area, RNA, update procedure;
wherein the transmitter is further configured to transmit (706), to the serving base station, a second message encrypted with the second key, the second message comprising an indication of the third key and an indication triggering the UE to enter a state with no dedicated resources allocated to the UE.

14. The apparatus of claim 13, wherein in the context retrieval procedure:
the receiver is further configured to receive, from the serving base station, a third message comprising information derived from the first key, the third message comprising a request for a context of the UE; and
the transmitter is further configured to transmit the second message to the serving base station in response to the third message; or
wherein the second message comprises a radio resource control, RRC, release message.

15. The apparatus of claim 13, wherein the at least one processor is configured to:
determine the third key by performing a horizontal key derivation; or
determine the third key by performing a vertical key derivation; or
derive the second key based on one or more parameters associated with the serving base station; or
derive the second key based on one or more parameters associated with the anchor base station;
wherein the one or more parameters in particular comprise at least one of an absolute radio frequency channel number, ARFCN, or a physical cell identifier, PCI, or wherein the second message further in particular comprises an indication that the one or more parameters are associated with the anchor base station.

16. The apparatus of claim 13, wherein the information for deriving the second key comprises a next hop chaining counter, NCC, or
wherein the at least one processor is configured to:
determine the third key during the context retrieval procedure while the UE is in a state with dedicated resources allocated to the UE; or
determine whether to perform anchor relocation based on a third message received from the serving base station, wherein the third message in particular indicates whether the UE has an uplink packet available for transmission.

17. The apparatus of claim 13,
wherein the type of RNA update procedure is determined based on at least one of a radio access network notification area code, RANAC, cell identity, tracking area identity, TAI, UE configured radio access network, RAN, notification area update, RNA, list, or routing area update, RAU, timer associated with the serving base station.

18. The apparatus of claim 13, wherein the at least one processor is configured to determine the third key during the context retrieval procedure with anchor non-relocation;
wherein the anchor non-relocation is in particular associated with at least one of an uplink transmission in a radio resource control, RRC, resume request message, a downlink transmission in a RRC release message, a periodic radio access network, RAN, notification area, RNA, update, or a location report triggered RAN paging procedure.

## Patentansprüche

1. Verfahren zur drahtlosen Kommunikation durch ein Benutzergerät, UE (120), umfassend:
Empfangen (802), von einer Ankerbasisstation (110), einer ersten Nachricht, die mit einem ersten Integritätsschutzschlüssel integritäts-geschützt ist und mit einem ersten Verschlüsselungsschlüssel verschlüsselt ist, wobei der erste Integritätsschutzschlüssel und der erste Verschlüsselungsschlüssel von einem ersten Schlüssel abgeleitet sind und die erste Nachricht Information zum Ableiten eines zweiten Schlüssels umfasst;
Eintreten, basierend auf einer Anzeige in der ersten Nachricht, in einen ersten Zustand ohne dem UE zugewiesenen dedizierte Ressourcen;
Übertragen (804), an eine bedienende Basisstation (110), einer zweiten Nachricht, die mit dem ersten Integritätsschutzschlüssel integritäts-geschützt ist, wobei die zweite Nachricht eine Anforderung zum Übergang vom ersten Zustand in einen zweiten Zustand mit dem UE zugewiesenen dedizierten Ressourcen umfasst;
Empfangen (806), von der bedienenden Basisstation, einer dritten Nachricht, die eine oder mehrere Anzeigen umfasst;
Bestimmen (808) eines dritten Schlüssels teilweise basierend auf zumindest einer der einen oder mehreren Anzeigen in der dritten Nachricht oder einer Blinddetektionsprozedur;
Verarbeiten (810) der dritten Nachricht basierend auf dem dritten Schlüssel; und
Verbleiben in dem ersten Zustand in Reaktion auf das Empfangen der dritten Nachricht;
wobei die zweite Nachricht für eine Funkzugangsnetzwerk-, RAN-, Notifikationsbereich-, RNA-, Aktualisierung gesendet wird.

2. Verfahren gemäß Anspruch 1, wobei das Bestimmen (808) des dritten Schlüssels das Bestimmen umfasst, ob der dritte Schlüssel der erste Schlüssel oder der zweite Schlüssel ist, teilweise basierend auf der einen oder den mehreren Anzeigen.

3. Verfahren gemäß Anspruch 2, wobei:
die dritte Nachricht einen Paketdatenkonvergenzprotokoll-, PDCP-, Header umfasst; und
die eine oder die mehreren Anzeigen einen Zählwert in dem PDCP-Header umfassen.

4. Verfahren gemäß Anspruch 3, wobei die Bestimmung ist, dass der dritte Schlüssel der erste Schlüssel ist, wenn der Zählwert ein nicht-initialer Wert ist, wobei der nichtinitiale Zählwert insbesondere eine Anker-Nichtverlagerung anzeigt.

5. Verfahren gemäß Anspruch 2, wobei die eine oder die mehreren Anzeigen zumindest eines aus einer Anzeige, ob der dritte Schlüssel der erste Schlüssel oder der zweite Schlüssel ist, oder einer Anzeige, ob ein oder mehrere Parameter zum Ableiten des dritten Schlüssels mit der Anker-Basisstation oder der bedienenden Basisstation assoziiert sind, umfassen.

6. Verfahren gemäß Anspruch 5, wobei die eine oder die mehreren Anzeigen anzeigen:
dass der dritte Schlüssel der erste Schlüssel ist und dass der eine oder die mehreren Parameter mit der Anker-Basisstation assoziiert sind; oder
dass der dritte Schlüssel der erste Schlüssel ist und dass der eine oder die mehreren Parameter mit der bedienenden Basisstation assoziiert sind; oder
dass der dritte Schlüssel der zweite Schlüssel ist und dass der eine oder die mehreren Parameter mit der Anker-Basisstation assoziiert sind; oder
dass der dritte Schlüssel der zweite Schlüssel ist und dass der eine oder die mehreren Parameter mit der bedienenden Basisstation assoziiert sind.

7. Verfahren gemäß Anspruch 5, wobei die eine oder die mehreren Anzeigen in einem Medienzugriffskontroll-, MAC-, Kontrollelement, CE, oder einer Paketdatenkonvergenzprotokoll-, PDCP-, Kontrollprotokolldateneinheit, PDU, bereitgestellt werden; oder
wobei der eine oder die mehreren Parameter zumindest eines von einer absoluten Funkfrequenzkanalnummer, ARFCN, oder einer physikalischen Zellkennung, PCI, aufweisen.

8. Verfahren gemäß Anspruch 1, wobei das Bestimmen (808) des dritten Schlüssels zumindest eines umfasst aus:
Annehmen, dass der dritte Schlüssel immer der zweite Schlüssel ist; oder
Annehmen, dass ein oder mehrere Parameter zum Ableiten des dritten Schlüssels immer mit der bedienenden Basisstation assoziiert sind.

9. Verfahren gemäß Anspruch 1, weiterhin umfassend:
Ableiten eines zweiten Integritätsschutzschlüssels und eines zweiten Verschlüsselungsschlüssels von dem dritten Schlüssel;
wobei das Verarbeiten (810) der dritten Nachricht insbesondere umfasst:
Entschlüsseln der dritten Nachricht unter Verwendung des zweiten Verschlüsselungsschlüssels; und
Verifizieren der dritten Nachricht unter Verwendung des zweiten Integritätsschutzschlüssels; oder
wobei die dritte Nachricht insbesondere weiterhin Information zum Ableiten eines vierten Schlüssels umfasst.

10. Verfahren gemäß Anspruch 1, wobei die Blinddetektionsprozedur zumindest eines umfasst aus:
Detektieren, ob der dritte Schlüssel der erste Schlüssel ist;
Detektieren, ob der dritte Schlüssel der zweite Schlüssel ist;
Detektieren, ob ein oder mehrere Parameter zum Ableiten des dritten Schlüssels mit der Anker-Basisstation assoziiert sind; oder
Detektieren, ob der eine oder die mehreren Parameter mit der bedienenden Basisstation assoziiert sind; oder
weiterhin umfassend das Bestimmen nach der Blinddetektionsprozedur, dass:
d er dritte Schlüssel der zweite Schlüssel ist und der eine oder die mehreren Parameter mit der Anker-Basisstation assoziiert sind; oder
d er dritte Schlüssel der erste Schlüssel ist und der eine oder die mehreren Parameter mit der Anker-Basisstation assoziiert sind.

11. Vorrichtung zur drahtlosen Kommunikation an einem Benutzergerät, UE (120; 2200), umfassend:
einen Empfänger (2212), der konfiguriert ist, um von einer Ankerbasisstation (110) eine erste Nachricht zu empfangen (802), die mit einem ersten Integritätsschutzschlüssel integritäts-geschützt ist und mit einem ersten Verschlüsselungsschlüssel verschlüsselt ist, wobei der erste Integritätsschutzschlüssel und der erste Verschlüsselungsschlüssel von einem ersten Schlüssel abgeleitet sind und die erste Nachricht Information zum Ableiten eines zweiten Schlüssels umfasst;
einen Sender (2212), der konfiguriert ist, um an eine bedienende Basisstation (110) eine zweite Nachricht zu übertragen (804), die mit dem ersten Integritätsschutzschlüssel integritäts-geschützt ist,
wobei der Empfänger weiterhin konfiguriert ist, um von der bedienenden Basisstation eine dritte Nachricht zu empfangen (806), die eine oder mehrere Anzeigen umfasst,
wobei die Vorrichtung weiterhin umfasst:
zumindest einen Prozessor (2208), der konfiguriert ist, zum:
Eintreten, basierend auf einer Anzeige in der ersten Nachricht, in einen ersten Zustand ohne dem UE zugewiesene dedizierte Ressourcen;
Bestimmen (808) eines dritten Schlüssels teilweise basierend auf zumindest einer der einen oder mehreren Anzeigen in der dritten Nachricht oder einer Blinddetektionsprozedur;
Verarbeiten (810) der dritten Nachricht basierend auf dem dritten Schlüssel; und
Verbleiben in dem ersten Zustand in Reaktion auf das Empfangen der dritten Nachricht; und
einen Speicher, der mit dem zumindest einen Prozessor gekoppelt ist,
wobei die zweite Nachricht eine Anforderung zum Übergang vom ersten Zustand in einen zweiten Zustand mit dem UE zugewiesenen dedizierten Ressourcen umfasst, und
wobei die zweite Nachricht für eine Funkzugangsnetzwerk-, RAN-, Notifikationsbereich-, RNA-, Aktualisierung gesendet wird.

12. Vorrichtung gemäß Anspruch 11, wobei der zumindest eine Prozessor (2208) weiterhin konfiguriert ist, das Verfahren gemäß einem der Ansprüche 2 bis 10 auszuführen.

13. Vorrichtung (110) zur drahtlosen Kommunikation an einer Ankerbasisstation, umfassend:
einen Sender (2212), der konfiguriert ist, eine mit einem ersten Schlüssel verschlüsselte erste Nachricht an ein Benutzergerät, UE (120), zu übertragen (702), wobei die erste Nachricht Information zum Ableiten eines zweiten Schlüssels und eine Anzeige umfasst, die das UE auslöst, in einen Zustand ohne dem UE zugewiesene dedizierte Ressourcen einzutreten;
zumindest einen Prozessor (2208), der konfiguriert ist, zum:
Bestimmen (704), während einer Kontextabrufprozedur mit einer bedienenden Basisstation, eines dritten Schlüssels zum Verschlüsseln von Kommunikation zwischen dem UE und der bedienenden Basisstation; und
Bestimmen, ob Ankerverlagerung auszuführen ist, basierend auf einem Typ einer Funkzugangsnetzwerk-, RAN-, Notifikationsbereich-, RNA-, Aktualisierungsprozedur;
wobei der Sender weiterhin konfiguriert ist, um an die bedienende Basisstation eine mit dem zweiten Schlüssel verschlüsselte zweite Nachricht zu übertragen (706), wobei die zweite Nachricht eine Anzeige des dritten Schlüssels und eine Anzeige umfasst, die das UE auslöst, in einen Zustand ohne dem UE zugewiesene dedizierte Ressourcen einzutreten.

14. Vorrichtung gemäß Anspruch 13, wobei in der Kontextabrufprozedur:
der Empfänger weiterhin konfiguriert ist, um von der bedienenden Basisstation eine dritte Nachricht zu empfangen, die von dem ersten Schlüssel abgeleitete Information umfasst, wobei die dritte Nachricht eine Anforderung für einen Kontext des UE umfasst; und
der Sender weiterhin konfiguriert ist, um die zweite Nachricht an die bedienende Basisstation in Reaktion auf die dritte Nachricht zu übertragen; oder
wobei die zweite Nachricht eine Funkressourcenkontroll-, RRC-, Freigabenachricht umfasst.

15. Vorrichtung gemäß Anspruch 13, wobei der zumindest eine Prozessor konfiguriert ist, zum: Bestimmen des dritten Schlüssels durch Ausführen einer horizontalen Schlüsselableitung; oder
Bestimmen des dritten Schlüssels durch Ausführen einer vertikalen Schlüsselableitung; oder
Ableiten des zweiten Schlüssels basierend auf einem oder mehreren Parametern, die mit der bedienenden Basisstation assoziiert sind; oder
Ableiten des zweiten Schlüssels basierend auf einem oder mehreren Parametern, die mit der Anker-Basisstation assoziiert sind;
wobei der eine oder die mehreren Parameter insbesondere zumindest eines aus einer absoluten Funkfrequenzkanalnummer, ARFCN, oder einer physikalischen Zellkennung, PCI, umfassen, oder wobei die zweite Nachricht weiterhin insbesondere eine Anzeige umfasst, dass der eine oder die mehreren Parameter mit der Anker-Basisstation assoziiert sind.

16. Vorrichtung gemäß Anspruch 13, wobei die Information zum Ableiten des zweiten Schlüssels einen Next-Hop-Verkettungszähler, NCC, umfasst, oder
wobei der zumindest eine Prozessor konfiguriert ist, zum:
Bestimmen des dritten Schlüssels während der Kontextabrufprozedur, während sich das UE in einem Zustand mit dem UE zugewiesenen dedizierten Ressourcen befindet; oder
Bestimmen, ob Ankerverlagerung auszuführen ist, basierend auf einer von der bedienenden Basisstation empfangenen dritten Nachricht, wobei die dritte Nachricht insbesondere anzeigt, ob das UE ein Uplink-Paket zur Übertragung verfügbar hat.

17. Vorrichtung gemäß Anspruch 13,
wobei der Typ der RNA-Aktualisierungsprozedur basierend auf zumindest einem aus einer Funkzugangsnetzwerk-Notifikationsbereichscode-, RANAC-, Zellidentität, Verfolgungsbereichsidentität-, TAI-, UE-konfigurierten Funkzugangsnetzwerk-, RAN-, Notifikationsbereichsaktualisierungs-, RNA-, Liste oder Routingbereichsaktualisierungs-, RAU-, Timer, der mit der bedienenden Basisstation assoziiert ist, bestimmt wird.

18. Vorrichtung gemäß Anspruch 13, wobei der zumindest eine Prozessor konfiguriert ist, den dritten Schlüssel während der Kontextabrufprozedur mit Anker-Nichtverlagerung zu bestimmen;
wobei die Anker-Nichtverlagerung insbesondere mit zumindest einem aus einer Uplink-Übertragung in einer Funkressourcenkontroll-, RRC-, Wiederaufnahmeanforderungsnachricht, einer Downlink-Übertragung in einer RRC-Freigabenachricht, einer periodischen Funkzugangsnetzwerk-, RAN-, Notifikationsbereichs-, RNA-, Aktualisierung oder einer Standortbericht-ausgelösten RAN-Funkrufprozedur assoziiert ist.

## Revendications

1. Un procédé de communication sans fil par un équipement utilisateur, UE (120), comprenant :
la réception (802), en provenance d'une station de base d'ancrage (110), d'un premier message à intégrité protégée par une première clé de protection d'intégrité et crypté par une première clé de cryptage, dans lequel la première clé de protection d'intégrité et la première clé de cryptage sont obtenues à partir d'une première clé, et le premier message comprend une information pour obtenir une deuxième clé ;
l'entrée, sur la base d'une indication dans le premier message, dans un premier état sans ressources dédiées attribuées à l'UE ;
la transmission (804), à une station de base de desserte (110), d'un deuxième message à intégrité protégée par la première clé de protection d'intégrité, dans lequel le deuxième message comprend une requête pour effectuer une transition du premier état à un second état avec des ressources dédiées attribuées à l'UE ;
la réception (806), en provenance de la station de base de desserte, d'un troisième message comprenant une ou plusieurs indications ;
la détermination (808) d'une troisième clé sur la base en partie d'au moins une des une ou plusieurs indications dans le troisième message ou d'une procédure de détection en aveugle ;
le traitement (810) du troisième message sur la base de la troisième clé ; et
le maintien dans le premier état en réponse à la réception du troisième message ;
dans lequel le deuxième message est envoyé pour une mise à jour de zone de notification de réseau d'accès radio, RAN, RNA.

2. Le procédé selon la revendication 1, dans lequel la détermination (808) de la troisième clé comprend la détermination si la troisième clé est la première clé ou bien la deuxième clé, sur la base en partie des une ou plusieurs indications.

3. Le procédé selon la revendication 2, dans lequel :
le troisième message comprend un en-tête de protocole de convergence de données par paquets, PDCP ; et
les une ou plusieurs indications comprennent une valeur de comptage dans l'en-tête de PDCP.

4. Le procédé selon la revendication 3, dans lequel la détermination est que la troisième clé est la première clé si la valeur de comptage est une valeur non-initiale, dans lequel la valeur de comptage non-initiale indique en particulier une non-relocalisation d'ancrage.

5. Le procédé selon la revendication 2, dans lequel les une ou plusieurs indications comprennent au moins une parmi une indication si la troisième clé est la première clé ou bien la deuxième clé, ou une indication si un ou plusieurs paramètres pour l'obtention de la troisième clé sont associés à la station de base d'ancrage ou bien à la station de base de desserte.

6. Le procédé selon la revendication 5, dans lequel les une ou plusieurs indications indiquent :
que la troisième clé est la première clé et que les un ou plusieurs paramètres sont associés à la station de base d'ancrage ; ou
que la troisième clé est la première clé et que les un ou plusieurs paramètres sont associés à la station de base de desserte ; ou
que la troisième clé est la deuxième clé et que les un ou plusieurs paramètres sont associés à la station de base d'ancrage ; ou
que la troisième clé est la deuxième clé et que les un ou plusieurs paramètres sont associés à la station de base de desserte.

7. Le procédé selon la revendication 5, dans lequel les une ou plusieurs indications sont délivrées dans un élément de contrôle, CE, de contrôle d'accès au support, MAC, ou dans une unité de données de protocole, PDU, de contrôle de protocole de convergence de données par paquets, PDCP ; ou
dans lequel les un ou plusieurs paramètres comprennent au moins un parmi un numéro absolu de canal de fréquence radio, ARFCN, ou un identificateur de cellule physique, PCI.

8. Le procédé selon la revendication 1, dans lequel la détermination (808) de la troisième clé comprend au moins une parmi :
la supposition que la troisième clé est toujours la deuxième clé ; ou
la supposition qu'un ou plusieurs paramètres pour l'obtention de la troisième clé sont toujours associés à la station de base de desserte.

9. Le procédé selon la revendication 1, comprenant en outre :
l'obtention d'une seconde clé de protection d'intégrité et
d'une seconde clé de cryptage à partir de la troisième clé ;
dans lequel le traitement (810) du troisième message comprend en particulier :
le décryptage du troisième message en utilisant la seconde clé de cryptage ; et
la vérification du troisième message en utilisant la seconde clé de protection d'intégrité ; ou
dans lequel le troisième message comprend en outre en particulier une information pour l'obtention d'une quatrième clé.

10. Le procédé selon la revendication 1, dans lequel la procédure de détection en aveugle comprend au moins une parmi :
la détection que la troisième clé est ou non la première clé ;
la détection que la troisième clé est ou non la deuxième clé ;
la détection que les un ou plusieurs paramètres pour l'obtention de la troisième clé sont ou non associés à la station de base d'ancrage ; ou
la détection que les un ou plusieurs paramètres sont ou
non associés à la station de base de desserte ; ou
comprenant en outre la détermination, après la procédure de détection en aveugle :
que la troisième clé est la deuxième clé et que les un ou plusieurs paramètres sont associés à la station de base d'ancrage ; ou
que la troisième clé est la première clé et que les un ou plusieurs paramètres sont associés à la station de base d'ancrage.

11. Un appareil de communication sans fil au niveau d'un équipement utilisateur, UE (120 ; 2200), comprenant :
un récepteur (2212) configuré pour recevoir (802), en provenance d'une station de base d'ancrage (110), un premier message à intégrité protégée par une première clé de protection d'intégrité et crypté par une première clé de cryptage, dans lequel la première clé de protection d'intégrité et la première clé de cryptage sont obtenues à partir d'une première clé, et le premier message comprend une information pour l'obtention d'une deuxième clé ;
un émetteur (2212) configuré pour transmettre (804), à une station de base de desserte (110), un deuxième message à intégrité protégée par la première clé de protection d'intégrité,
dans lequel le récepteur est configuré en outre pour recevoir (806), en provenance de la station de base de desserte, un troisième message comprenant une ou plusieurs indications,
dans lequel l'appareil comprend en outre :
au moins un processeur (2208) configuré pour :
entrer, sur la base d'une indication dans le premier message, dans un premier état sans ressources dédiées attribuées à l'UE ;
déterminer (808) une troisième clé sur la base en partie d'au moins une des une ou plusieurs indications dans le troisième message ou d'une procédure de détection en aveugle ;
traiter (810) le troisième message sur la base de la troisième clé ; et
se maintenir dans le premier en réponse à la réception du troisième message ; et
une mémoire couplée à l'au moins un processeur,
dans lequel le deuxième message comprend une requête pour effectuer une transition du premier état à un second état avec des ressources dédiées attribuées à l'UE, et
dans lequel le deuxième message est envoyé pour une mise à jour de zone de notification de réseau d'accès radio, RAN, RNA.

12. L'appareil selon la revendication 11, dans lequel l'au moins un processeur (2208) est configuré en outre pour mettre en œuvre le procédé selon l'une des revendications 2 à 10.

13. Un appareil (110) de communication sans fil au niveau d'une station de base d'ancrage, comprenant :
un émetteur (2212) configuré pour transmettre (702), à un équipement utilisateur, UE (120), un premier message crypté par une première clé, le premier message comprenant une information pour obtenir une deuxième clé et une indication déclenchant l'UE pour entrer dans un état sans ressources dédiées attribuées à l'UE ;
au moins un processeur (2208) configuré pour :
déterminer (704), durant une procédure de récupération de contexte avec une station de base de desserte, une troisième clé pour le cryptage de communications entre l'UE et la station de base de desserte ; et
déterminer s'il y a ou non lieu de réaliser une relocalisation d'ancrage sur la base d'un type de procédure de mise à jour de zone de notification de réseau d'accès radio, RAN, RNA ;
dans lequel l'émetteur est configuré en outre pour transmettre (706), à la station de base de desserte, un deuxième message crypté par la deuxième clé, le deuxième message comprenant une indication de la troisième clé et une indication déclenchant l'UE pour entrer dans un état sans ressources dédiées attribuées à l'UE.

14. L'appareil selon la revendication 13, dans lequel, dans la procédure de récupération de contexte :
le récepteur est configuré en outre pour recevoir, en provenance de la station de base de desserte, un troisième message comprenant une information obtenue à partir de la première clé, le troisième message comprenant une requête pour un contexte pour l'UE ; et
l'émetteur est configuré en outre pour transmettre le deuxième message à la station de base de desserte en réponse au troisième message ; ou
dans lequel le deuxième message comprend un message de libération de contrôle de ressource radio, RRC.

15. L'appareil selon la revendication 13, dans lequel l'au moins un processeur est configuré pour :
déterminer la troisième clé en réalisant une obtention de clé horizontale ; ou
déterminer la troisième clé en réalisant une obtention de clé verticale ; ou
obtenir la deuxième clé sur la base d'un ou plusieurs paramètres associés à la station de base de desserte ; ou
obtenir la deuxième clé sur la base d'un ou plusieurs paramètres associés à la station de base d'ancrage ;
dans lequel les un ou plusieurs paramètres comprennent en particulier au moins un parmi un numéro absolu de canal de fréquence radio, ARFCN, ou un ide²ntificateur de cellule physique, PCI, ou dans lequel le deuxième message comprend en outre en particulier une indication que les un ou plusieurs paramètres sont associés à la station de base d'ancrage.

16. L'appareil selon la revendication 13, dans lequel l'information pour l'obtention de la deuxième clé comprend un compteur de chaînage de saut suivant, NCC, ou
dans lequel l'au moins un processeur est configuré pour :
déterminer la troisième clé durant la procédure de récupération de contexte alors que l'UE est dans un état avec des ressources dédiées attribuées à l'UE ; ou
déterminer s'il y a ou non lieu de réaliser une relocalisation d'ancrage sur la base d'un troisième message reçu en provenance de la station de base de desserte, dans lequel le troisième message indique en particulier si l'UE a ou non un paquet de liaison montante disponible pour la transmission.

17. L'appareil selon la revendication 13,
dans lequel le type de procédure de mise à jour RNA est déterminé sur la base d'au moins une parmi une identité de cellule de code de zone de notification de réseau d'accès radio, RANAC, une identité de zone de suivi, TAI, une liste de mise à jour de zone de notification, RNA, de réseau d'accès radio, RAN, configurée par l'UE, ou une temporisation de mise à jour de zone de routage, RAU, associée à la station de base de desserte.

18. L'appareil selon la revendication 13, dans lequel l'au moins un processeur est configuré pour déterminer la troisième clé durant la procédure de récupération de contexte avec non-relocalisation d'ancrage ;
dans lequel la non-relocalisation d'ancrage est associée en particulier à au moins une parmi une transmission de liaison montante dans un message de requête de reprise de contrôle de ressource radio, RRC, une transmission de liaison descendante dans un message de libération RRC, une mise à jour de zone de notification de réseau d'accès radio, RAN, RNA, périodique ou une procédure de paging RAN déclenchée par rapport de localisation.
